# EUROPEAN PATENT SPECIFICATION

(11) **EP 3 379 498 B1**
(45) Date of publication and mention of the grant of the patent: **20.11.2024**
(21) Application number: 18157263.7
(22) Date of filing: 16.02.2018
(51) Int. Cl.: G07C 9/00, G06F 21/60

(54) **INTERCOM SYSTEM AND COMMUNICATION METHOD IN INTERCOM SYSTEM**
GEGENSPRECHANLAGE UND KOMMUNIKATIONSVERFAHREN IN EINER GEGENSPRECHANLAGE
SYSTÈME D'INTERPHONE ET PROCÉDÉ DE COMMUNICATION DANS UN SYSTÈME D'INTERPHONE

(30) Priority: 23.03.2017 JP 2017057797
(43) Date of publication of application: 26.09.2018
(73) Proprietor: Panasonic Intellectual Property Management Co., Ltd., Osaka-shi, Osaka 540-6207 (JP)
(72) Inventor: ANDO, Satoshi, Osaka, 540-6207 (JP); HATAE, Eiichi, Osaka, 540-6207 (JP); UE, Chikashi, Osaka, 540-6207 (JP); HYAKUDOME, Takahiro, Osaka, 540-6207 (JP); HARAGUCHI, Masahiko, Osaka, 540-6207 (JP)
(74) Representative: Eisenführ Speiser

(56) References cited:
- US-A1- 2003 235 308
- US-A1- 2012 280 783
- US-A1- 2016 173 280
- US-B1- 8 780 201
- US-B2- 8 942 375
- US-B2- 9 270 931

## Description

### BACKGROUND

### 1. Technical Field

The present disclosure relates to an intercom system and a communication method in the intercom system.

### 2. Description of the Related Art

Intercom systems, in each of which identification of a visitor at an entrance or unlocking of an entrance door can be performed from an indoor intercom master device, have come in wide use in the related art. Recently, technologies that make it possible to perform this type of visitor identification or door unlocking operation from a mobile wireless terminal, such as a smartphone, have received attention (refer to, for example, Japanese Patent Unexamined Publication No. 2005-23689 (PTL 1)).

In the technology (which is hereinafter referred to as the "related art") that is disclosed in PTL 1, when receiving a door unlocking command from a wireless terminal, a service center apparatus performs authentication processing on the wireless terminal, and in a case where the authentication succeeds, provides an instruction to door-unlock an entrance door that is in advance associated with the wireless terminal. In the related art, for example, it is possible that when a child goes home, his/her parent at work carries out a telephone conversation with the child and unlocks an entrance door with a remote operation in order for the child to enter the house.

Furthermore, in a case where the intercom master device and the wireless terminal perform communication with each other through an authentication server, in order to ensure the security, encryption communication is performed between the intercom master device and the authentication server and between the authentication server and the wireless terminal. The authentication server decodes encryption data that is received from the intercom master device, encrypts the decoded encryption data, and transmits a result of the encryption to the wireless terminal. Furthermore, the authentication server decodes the encryption data that is received from the wireless terminal, encrypts the decoded encryption data, and transmits a result of the encryption to the intercom master device.

US 8,780,201 B1 discloses methods for using a doorbell that is configurable to wirelessly communicate with a remotely located computing device and which can include obtaining the doorbell that comprises a speaker, a microphone, and a camera. Methods can include entering a sleep mode in which the doorbell's wireless communication, the camera, and the microphone are disabled. Methods can include exiting the sleep mode and entering a standby mode in response to the doorbell detecting a first indication of a visitor. The standby mode can increase electrical activities of the doorbell's camera and microphone relative to the sleep mode. Methods can include entering an alert mode in response to detecting a second indication of the visitor. The doorbell can record an image using the camera during the alert mode. Wireless communication can be enabled during the alert mode to send an alert to the remotely located computing device.

US 2016/0173280 A1 discloses a computing device, which can obtain a session key for encrypting data that is communicated between a client device and the computing device. The computing device can receive, from the client device, an encrypted request for data. The encrypted request can be encrypted by the client device using the session key. The data requested can be stored on a second computing device. The computing device can send, to the second computing device, a copy of the session key and the encrypted request for data. The second computing device can decrypt the data using the session key and can also encrypt data responsive to the request using the session key.

US 9,270,931 B2 discloses an intercom system utilizing Wi-Fi, which is responsive to a processor of a first intercom unit establishing a wireless data channel with one or more second intercom units of a plurality of intercom units in a wireless network, and responsive to an encoder of the first intercom unit repeatedly encoding, during a repeated time interval, data to be transmitted to the one or more second intercom units over the wireless data channel while pausing the wireless data channel such that the first intercom unit does not transmit the encoded data during the repeated time interval, the processor may receive an indication to un-pause the wireless data channel. A network controller of the first intercom unit may wirelessly transmit the data last encoded by the encoder during the repeated time interval to the one or more second intercom units.

US2003/235308 A1 discloses an encrypted communication network.

### SUMMARY

However, there is room for improvement in terms of the security in the related art. That is, in the authentication server, because encryption is not employed until the received encryption, after decoded, is again encrypted, there is a concern that the information will be illegally acquired by the third party in the meantime.

An object of the present disclosure is to provide an intercom system and a communication method in the intercom system, which are capable of performing an operation of unlocking an entrance door from a wireless terminal in a state where higher safety is secured.

According to an aspect of the present disclosure, there is provided an intercom system as disclosed in claim 1.

According to another aspect of the present disclosure, there is provided a communication method in an intercom system as disclosed in claim 8.

However, according to the present disclosure, in a state where high safety is secured, an operation of unlocking an entrance door can be performed from a wireless terminal.

### BRIEF DESCRIPTION OF THE DRAWINGS

FIG. 1 is a systematic configurational diagram illustrating an example of a configuration of an intercom system according to an embodiment of the present disclosure;
FIG. 2 is a block diagram illustrating an example of a configuration of an entrance slave device according to the present embodiment;
FIG. 3 is a block diagram illustrating an example of a configuration of an intercom master device according to the present embodiment;
FIG. 4 is a block diagram illustrating an example of a configuration of a wireless terminal according to the present embodiment;
FIG. 5 is a flowchart illustrating an example of operation of the intercom master device according to the present embodiment;
FIG. 6 is a sequence diagram illustrating an example of operation of an intercom system in a case where a visitor is at an entrance, according to the present embodiment;
FIG. 7 is a plan diagram illustrating an example of a display state of the wireless terminal that results when a terminal-destined visiting notification is received, according to the present embodiment;
FIG. 8 is a plan diagram illustrating an example of a display state of the wireless terminal that results when a telephone conversation is carried output, according to the present embodiment;
FIG. 9 is a plan diagram illustrating an example of a display state of the wireless terminal that results when an unlocking instruction operation is performed, according to the present embodiment;
FIG. 10 is a plan diagram illustrating an example of a display state of the wireless terminal that results when an unlocking operation succeeds, according to the present embodiment;
FIG. 11 is a sequence diagram illustrating an example of operation of the intercom system in a case where a visitor is not at the entrance, according to the present embodiment;
FIG. 12 is a plan diagram illustrating an example of a display state of the wireless terminal that results when the unlocking operation fails, according to the present embodiment; and.
FIG. 13 is a sequence diagram illustrating a flow for initial settings up to and including registration of the wireless terminal by the intercom master device.

### DETAILED DESCRIPTION

An embodiment of the present disclosure will be described in detail below with reference to the drawings.

### System Overview

First, an overview of an intercom system according to an embodiment of the present disclosure is described.

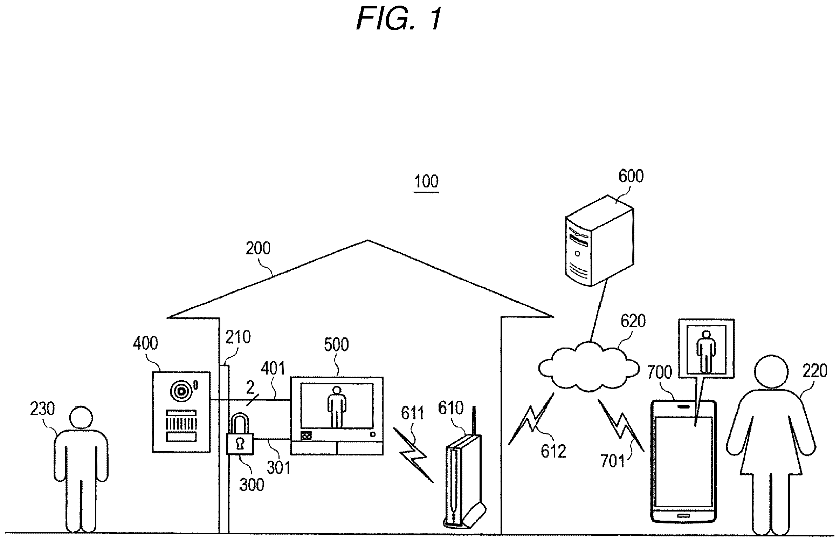

FIG. 1 is a systemic configurational diagram illustrating an example of a configuration of the intercom system according to the present embodiment. At this point, a surrounding environment for a systematic configuration is illustrated together as well.

As illustrated in FIG. 1, intercom system 100, for example, has electronic lock 300 that is provided on entrance door 210 of building 200 that is a house of user 220, entrance slave device 400 that is installed in the vicinity of entrance door 210, and intercom master device 500 that is installed inside the building 200.

Electronic lock 300 is a locking device that performs unlocking/locking of entrance door 210, in response to an unlocking request/locking request that is an electric signal, in addition to performing a normal key operation on a keyhole. Electronic lock cord 301 that is a JEM-A standard cord is laid between electronic lock 300 and intercom master device 500. Electronic lock 300 performs the unlocking/locking under the control of the intercom master device 500.

Entrance slave device 400 includes a call button, a speaker, a microphone, and a digital camera. Two-line cable 401 that is made from a pair of copper wires is laid between entrance slave device 400 and intercom master device 500. Entrance slave device 400 has a function of capturing an image of the vicinity of an entrance and transmitting the captured image to intercom master device 500, in addition to a function of making a call and carrying out a telephone conversation. Two-line cable 401, for example, is a communication cable that has installed in the past in building 200 and is used for an old-type intercom system which does not perform transfer of an image signal.

Intercom master device 500 includes a speaker, a liquid crystal display, a monitor button, a telephone conservation button, a microphone, and locking and unlocking buttons. With initial settings, intercom master device 500 registers electronic lock 300 and entrance slave device 400 in advance with intercom master device 500 itself. In addition to a function of answering a call (starting to carry out a telephone conversation), intercom master device 500 has a function of displaying the image of the vicinity of the entrance that is sent from entrance slave device 400 and a function of enabling electronic lock 300 to perform an operation of unlocking/locking entrance door 210 on intercom master device 500 itself.

Furthermore, intercom system 100 has wireless communication router 610 that is installed inside building 200, authentication server 600 that connects to public network 620, such as the Internet, and wireless terminal (a communication terminal) 700, such as a smartphone, that is possibly carried outside building 200.

Authentication server 600 registers intercom master device 500 with Authentication server 600 itself at a timing when intercom master device 500 is powered on, and performs an exchange of key information with intercom master device 500. Accordingly, a first encryption communication path is established between intercom master device 500 and authentication server 600. Furthermore, authentication server 600 registers wireless terminal 700 with Authentication server 600 itself at a timing when an IP address of wireless terminal 700 is changed, and performs an exchange of key information with wireless terminal 700. Accordingly, second encryption communication path is established between authentication server 600 and wireless terminal 700.

Furthermore, with the initial settings, intercom master device 500 registers wireless terminal 700 with intercom master device 500 itself, and performs an exchange of key information with wireless terminal 700. Accordingly, a third encryption communication path is established between intercom master device 500 and wireless terminal 700. Furthermore, according to the invention, a double encryption communication path is established between intercom master device 500 and authentication server 600 and between authentication server 600 and wireless terminal 700. A flow for the initial settings up to and including the registration of wireless terminal 700 by the intercom master device 500 will be described below.

With wireless communication lines 611 and 612, wireless communication router 610 connects to each of intercom master device 500 and public network 620, and performs relay of communication between intercom master device 500 and public network 620. Wireless communication line 611, for example, is a Wi-Fi (a registered trademark) line. Wireless communication line 612, for example, is a Long Term Evolution (LTE) line.

Authentication server 600 is connected to wireless communication router 610 through public network 620, and performs encryption communication with intercom master device 500 through wireless communication router 610. Furthermore, authentication server 600 performs authentication processing on wireless terminal (for example, wireless terminal 700) that makes an attempt to access intercom master device 500. In a case where the authentication succeeds, authentication server 600 performs the encryption communication with the wireless terminal, and performs relay of communication between the wireless terminal and the intercom master device 500.

Wireless terminal 700 makes a connection to wireless communication line 701 through public network 620, and has access to intercom master device 500 through authentication server 600. Wireless communication line 701, for example, is the LTE line. Wireless terminal 700 performs the encryption communication with authentication server 600 through public network 620. Furthermore, wireless terminal 700 can make a connection to intercom master device 500 from inside and outside building 200 through public network 620, authentication server 600, and wireless communication router 610, and can perform the encryption communication with intercom master device 500.

Furthermore, wireless terminal 700 includes a speaker, a touch panel-attached liquid crystal display, a microphone, a terminal monitor button, a terminal telephone conversation button, a terminal unlocking button, and a terminal locking button. These buttons, for example, are image buttons that are displayed on the touch panel-attached liquid crystal display.

Intercom master device 500 described above performs transfer of an image, audio, and various pieces of control information between entrance slave device 400 and wireless terminal 700. Along with this, Intercom master device 500 receives a terminal's unlocking instruction from wireless terminal 700 and causes electronic lock 300 to be unlocked. Intercom master device 500 described above has a function of also enabling wireless terminal 700 to answer a call (starting to carry out a telephone conversation), display an image of the vicinity of an entrance, and perform an operation of unlocking/locking electronic lock 300.

Entrance slave device 400 and intercom master device 500, for example, packetizes various pieces of data that are targets for transmission to the other party and then performs coding on a result of the packetization, based on the technology that is disclosed in Japanese Patent Unexamined Publication No. 2007-124227 (PTL 2), and transmits a result of the coding to the other party by performing packet transfer. At this time, entrance slave device 400 and intercom master device 500 each perform baseband transfer, by performing time division duplex (time division bidirectional transfer). That is, entrance slave device 400 and intercom master device 500 alternatively switch between transmission and reception according to an elapsed time, and performs transmission only in a section in which the other party does not perform transmission.

Accordingly, intercom system 100 can realize transmission of a high-quality image audio signal from entrance slave device 400 to intercom master device 500, utilizing existing two-line cable 401 effectively. However, a scheme for communication between entrance slave device 400 and intercom master device 500 is not limited to the example in question, and various communication schemes that are well known can be employed.

It is also possible that while user 220 is not only inside building 200 but also outside building 200, when visitor 230 is at the entrance, intercom system 100 notifies user 220 that visitor 230 is at the entrance. In intercom system 100, user 220 has a conversation with visitor 230 while checking an intercom image. In a case where visitor 230 is identified as a user 220's child and so forth, it is possible that an operation of unlocking entrance door 210 is performed remotely.

However, in a case where wireless terminal 700 provides an instruction for unlocking, through public network 620, as described above, there is room for improvement in terms of security. Thus, intercom master device 500 limits the unlocking of electronic lock 300 at the terminal's unlocking instruction to a case where visitor 230 is at entrance door 210, thereby preventing unnecessary unlocking by a remote operation and improving the security.

The frequency with which persons visit building 200 during absence from home is not higher than usual. For this reason, although the terminal's unlocking instruction is transmitted based on an operation by an unauthorized person, there is a low likelihood that a timing of the instruction will be consistent with a timing at which the person makes a visit. Therefore, intercom system 100 can realize an unlocking operation from wireless terminal 700, in a state where a likelihood is reduced that entrance door 210 will be unlocked by the unauthorized person at a timing at which the unlocking is originally set not to be performed.

### Configuration of Each Device

At this point, a configuration of a main device of intercom system 100 is described. Although not illustrated, each device that constitutes intercom system 100, for example, has a Central Processing Unit (CPU), a storage medium, such a Read Only Memory (ROM) in which a control program is stored, a memory for operation, such as a Radom Access Memory (RAM), and a communication circuit. In this case, a function of each unit that will be described below is realized by the CPU executing the control program.

### Configuration of the Electronic Lock

A configuration of a well-known electronic lock can be employed as a configuration of electronic lock 300. For example, electronic lock 300 is configured to include a JEM-A adapter that includes a JEM-A standard HA terminal-A to which one end of electronic lock cord 301 is connected and to switch between unlocked and locked states according to a signal that is input into a terminal.

With this configuration, electronic lock 300 can perform the unlocking/locking of entrance door 210 under the control of intercom master device 500.

### Configuration of the Entrance Slave Device

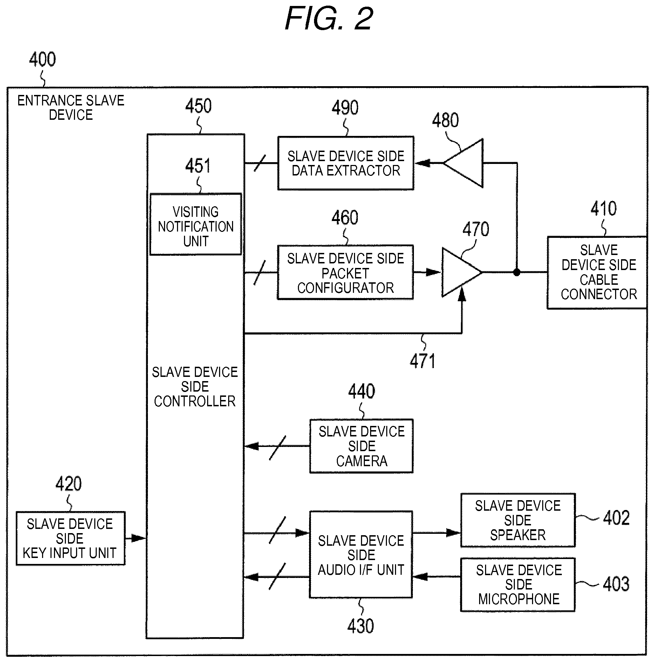

FIG. 2 is a block diagram illustrating an example of a configuration of entrance slave device 400.

In FIG. 2, entrance slave device 400 has slave device side cable connector 410, slave device side key input unit 420, slave device side speaker 402, slave device side microphone 403, slave device side audio interface (I/F) unit 430, and slave device side camera 440. Furthermore, entrance slave device 400 has slave device side controller 450, slave device side packet configurator 460, slave device side transmission driver 470, slave device side reception driver 480, and slave device side data extractor 490.

Slave device side cable connector 410, for example, includes a connection terminal for the two-line cable, and connects between one entrance side end of two-line cable 401 and each of slave device side transmission driver 470 and slave device side reception driver 480, in a state where a signal is transferable.

Slave device side key input unit 420 includes the call button described above, and, when the call button is operated, outputs a signal indicating that the call button is operated, to slave device side controller 450.

Slave device side speaker 402 converts an analog audio data that is output from slave device side audio I/F unit 430, into audio and outputs a result of the conversion.

Slave device side microphone 403 collects ambient audio, converts the ambient audio into analog audio data, and outputs a result of the conversion to slave device side audio I/F unit 430.

Slave device side audio I/F unit 430 converts digital audio data that is output from slave device side controller 450, into analog audio data, adjusts a signal level of the analog audio data, and outputs a result of the adjustment to slave device side speaker 402. Furthermore, slave device side audio I/F unit 430 adjusts a signal level of analog audio data that is output from slave device side microphone 403, converts the signal level-adjusted analog audio data into digital audio data, and outputs a result of the conversion to slave device side controller 450. The analog conversion and the digital conversion in question are performed by A/D and D/A converters (not illustrated), respectively.

Slave device side audio I/F unit 430 performs prescribed audio compression processing on data that results from performing the digital conversion on analog audio data which is output from slave device side microphone 403, and may output data that is obtained by performing such processing, as digital audio data, to slave device side controller 450. Furthermore, in a case where the digital audio data that is output from slave device side controller 450 is data that is obtained by performing the prescribed audio compression processing, slave device side audio I/F unit 430 performs prescribed audio decompression processing on the data, and then performs the digital/analog conversion.

Slave device side camera 440 includes the digital camera described above, and captures an image of the entrance, generates digital image data and outputs the generated digital image data to slave device side controller 450. Slave device side camera 440 may be equipped with an encoder module. That is, slave device side camera 440 may perform prescribed moving-image compression processing, such as one in compliance with H.264, on the image data that is output from the digital camera, and may output data that is obtained by such processing, as digital image data, to the slave device side controller 450.

When visitor 230 is at entrance door 210, visiting notification unit 451 of slave device side controller 450 transmits a visiting notification indicating that visitor 230 is at entrance door 210, to intercom master device 500. For example, when a signal indicating the call button is operated is output from slave device side key input unit 420, visiting notification unit 451 transmits the visiting notification to intercom master device 500.

Visiting notification unit 451 may determine the presence or absence of visitor 230 at entrance door 210 based on an output signal of a human motion sensor that is installed in the vicinity of entrance door 210 or on human motion detection processing and the like on an image obtained by slave device side camera 440.

Furthermore, when visitor 230 is at entrance door 210 or when an audio image transmission instruction is received from intercom master device 500, slave device side controller 450 starts prescribed control processing for monitoring the vicinity of the entrance and realizing an image-accompanied telephone conversation. The control processing in question is performed by transmitting to intercom master device 500 the digital audio data and the digital image data that are output from slave device side audio I/F unit 430 and slave device side camera 440, respectively. Furthermore, the control processing is performed by outputting to slave device side audio I/F unit 430 the digital audio data that is received from intercom master device 500.

When transmitting the visiting notification or when receiving the audio image transmission instruction, slave device side controller 450 performs control in such a manner that slave device side speaker 402, slave device side microphone 403, slave device side audio I/F unit 430, and slave device side camera 440 start to operate.

Furthermore, slave device side controller 450 may transmit various pieces of control data relating to operation of entrance slave device 400 or operation of intercom master device 500, to intercom master device 500. The control data in question, for example, includes sensing information of various sensor devices (not illustrated), such as a temperature sensor, an illuminance sensor, and a human motion sensor, which are included in entrance slave device 400.

Slave device side packet configurator 460 suitably divides and packetizes the digital audio data and the digital image data (along and the control data) that are output from slave device side controller 450, codes generated packet data, and generates an uplink signal that is destined for intercom master device 500. Slave device side packet configurator 460 outputs the generated uplink signal to slave device side transmission driver 470.

Slave device side transmission driver 470 buffers the uplink signal that is output from slave device side packet configurator 460, performs adjustment of a signal level of the buffered uplink signal, and transmits the signal level-adjusted signal to intercom master device 500 through slave device side cable connector 410.

Slave device side reception driver 480 buffers a downlink signal that is sent from intercom master device 500 through slave device side cable connector 410, by performing adjustment of a signal level of the downlink signal, and outputs the signal level-adjusted downlink signal to slave device side data extractor 490.

Slave device side data extractor 490 extracts the digital audio data of intercom master device 500, which is included in the downlink signal, from the downlink signal that is output from slave device side reception driver 480, and outputs the extracted digital audio data to slave device side controller 450.

Transmission and reception of various pieces of information between entrance slave device 400 itself and intercom master device 500 by slave device side controller 450 described above are performed through slave device side packet configurator 460, slave device side transmission driver 470, slave device side cable connector 410, slave device side reception driver 480, and slave device side data extractor 490.

However, based on transmission control information that is shared (retained) in advance between entrance slave device 400 itself and intercom master device 500, slave device side controller 450 controls operation of each of slave device side transmission driver 470 and slave device side reception driver 480 in such a manner that the transmission of the uplink signal and the reception of the downlink signal are performed in a time-division manner. The transmission control information is information that stipulates transmission timing and reception timing for each of entrance slave device 400 and intercom master device 500, in time division duplex between entrance slave device 400 and intercom master device 500. According to the transmission control information, control of operation of slave device side transmission driver 470, for example, is performed by outputting enable signal 471 or the like that controls operation (driving of a signal) of slave device side transmission driver 470.

Furthermore, delivery of data between each of the units described above by entrance slave device 400 is performed by performing digital transfer, except between each of slave device side speaker 402 and slave device side microphone 403, and slave device side audio I/F unit 430.

With this configuration, when visitor 230 is at entrance door 210, entrance slave device 400 can transmit the visiting notification to intercom master device 500.

### Configuration of the Intercom Master Device

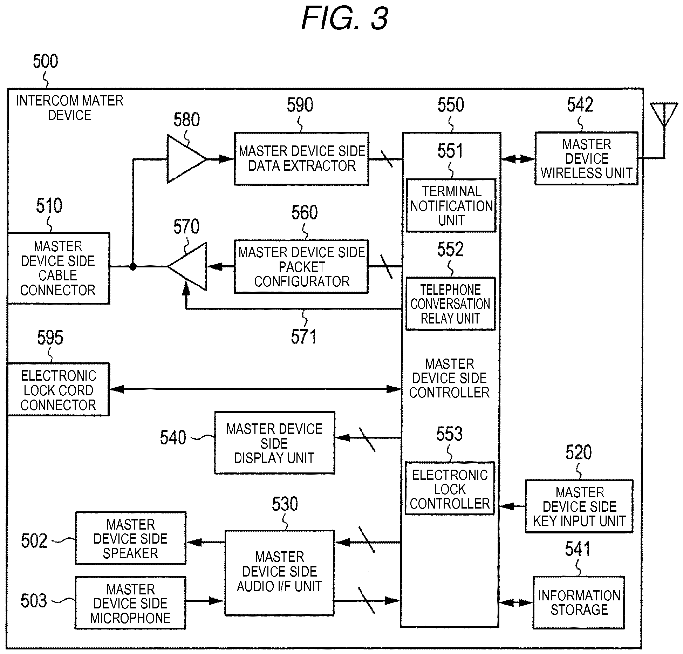

FIG. 3 is a block diagram illustrating an example of a configuration of intercom master device 500.

In FIG. 3, intercom master device 500 has master device side cable connector 510, master device side key input unit 520, master device side speaker 502, master device side microphone 503, master device side audio I/F unit 530, and master device side display unit 540. Furthermore, intercom master device 500 has information storage 541, master device wireless unit 542, master device side controller 550, master device side packet configurator 560, master device side transmission driver 570, master device side reception driver 580, master device side extractor 590, and electronic lock cord connector 595.

Master device side cable connector 510, for example, includes a connection terminal for the two-line cable, and connects between one indoors-side end of two-line cable 401 and each of master device side transmission driver 570 and master device side reception driver 580, in a state where a signal is transferable.

Master device side key input unit 520 includes the monitor button and the telephone conversation button, which are described above, and when one of these buttons is operated, outputs a signal indicating that the button is operated, to master device side controller 550.

Master device side speaker 502 converts analog audio data that is output from master device side audio I/F unit 530 into audio, and outputs the resulting audio.

Master device side microphone 503 collects ambient audio, converts the ambient audio into analog audio data, and outputs a result of the conversion to master device side audio I/F unit 530.

Master device side audio I/F unit 530 converts digital audio data that is output from master device side controller 550, into analog audio data, performs adjustment of a signal level of the analog audio data, and outputs the signal level-adjusted analog audio data to master device side speaker 502. Furthermore, master device side audio I/F unit 530 adjusts a signal level of the analog audio data that is output from master device side microphone 503, converts the signal level-adjusted analog audio data into digital audio data, and outputs a result of the conversion to master device side controller 550. The analog conversion and the digital conversion in question are performed by the A/D and D/A converters (not illustrated), respectively.

Slave device side audio I/F unit 530 performs prescribed audio compression processing on data that results from performing the digital conversion on analog audio data which is output from slave device side microphone 503, and may output data that is obtained by performing such processing, as digital audio data, to slave device side controller 550. Furthermore, in a case where the digital audio data that is output from slave device side controller 550 is data that is obtained by performing the prescribed audio compression processing, slave device side audio I/F unit 530 may perform prescribed audio decompression processing on the data, and then may perform the digital/analog conversion.

Master device side display unit 540 includes the liquid crystal display described above, and reproduces the digital image data that is output from master device side controller 550 and displays an image of the entrance. In a case where the digital image data that is output from master device side controller 550 is data that is obtained by performing prescribed moving-image compression processing, prescribed moving-image decompression processing is performed on the data, and image displaying of the resulting data is performed.

ID information, such as a Media Access Control (MAC) address, and log-in information, such as a password, which are exchanged in advance between intercom master device 500 itself and wireless terminal 700 that is authorized to carry out a telephone conversation between intercom master device 500 itself and entrance slave device 400 and to perform operations of unlocking and locking electronic lock 300 are included in information storage 541. Furthermore, an encryption key (hereinafter referred to as a "first encryption key") and a decoding key (hereinafter referred to as a "first decoding key"), which are exchanged in advance between intercom master device 500 itself and wireless terminal 700 and an encryption key (hereinafter referred to as a "second encryption key") and a decoding key (hereinafter referred to as a "second encoding key"), which are exchanged in advance between intercom master device 500 itself and authentication server 600, are included in information storage 541.

Master device wireless unit 542 includes a wireless communication circuit and an antenna, and makes a connection to wireless communication router 610 through wireless communication lines 611 and 612, which are described, in such a manner that communication with wireless communication router 610 itself is possible. Master device wireless unit 542 makes a connection to wireless terminal 700 through wireless communication router 610, public network 620, and authentication server 600, in such a manner that communication with wireless terminal 700 itself is possible.

When receiving the visiting notification described above from entrance slave device 400, master device side controller 550 outputs prescribed call sound from master device side speaker 502. The output of the call sound, for example, is performed by the master device side controller 550 outputting a digital audio signal for the prescribed call sound to master device side audio I/F unit 530.

In addition, master device side controller 550 starts the monitoring of the vicinity of the entrance and prescribed control processing for realizing an image-accompanied telephone conversation between entrance slave device 400 and intercom master device 500. The control processing in question is performed by transmitting the digital audio data that is output from master device side audio I/F unit 530 to entrance slave device 400 and by outputting to slave device side audio I/F unit 430 and master device side display unit 540 the digital audio data and the digital image data, respectively, that are received from entrance slave device 400. However, master device side controller 550 does not perform transmission of the digital audio data to entrance slave device 400 until a signal indicating that the telephone conservation button is operated is output from master device side key input unit 520.

When receiving the visiting notification, master device side controller 550 may perform control in such a manner that master side speaker 502, master side microphone 503, master device side audio I/F unit 530, and master device side display unit 540 start to operate.

Furthermore, master device side controller 550 may transmit control data relating to the operation of intercom master device 500 or the operation of entrance slave device 400 to entrance slave device 400. The control data in question, for example, includes control signals for controlling camera operation (operation, such as data rate setting, panning, tilting, lighting, or filtering) by entrance slave device 400 from intercom master device 500 or operation of each of various sensor devices that are included in entrance slave device 400. Furthermore, the control data in question includes a control signal for controlling operation of a device (an electronic key of a door or the like) that is installed outdoors, through a wireless communication circuit and the like (which are not illustrated) which are included in entrance slave device 400.

In addition, when receiving a log-in request from wireless terminal 700 through authentication server 600, master device side controller 550 performs the authentication processing on wireless terminal 700, based on the log-in information that is stored in information storage 541. That is, master device side controller 550, for example, decodes the ID information and the password that are encrypted, which are included in the log-in request, with pieces of information of the first encryption key and the second decoding key, and collates results of the decoding with a detail of the log-in information. In a case where the authentication succeeds, telephone conversation relay unit 552 makes a connection to wireless terminal 700 through authentication server 600.

Master device side controller 550 performs data encryption/decoding in communication with wireless terminal 700. That is, master device side controller 550 decodes encryption data that is received from wireless terminal 700 through authentication server 600, using the first decoding key and the second decoding key. Furthermore, master device side controller 550 encrypts data that is transmitted to wireless terminal 700 through authentication server 600, using the first encryption key and the second encryption key.

When receiving the visiting notification described above from entrance slave device 400 in a state where the connection to wireless terminal 700 is made, master device side controller 550 performs transmission of a terminal-destined visiting notification to wireless terminal 700 in terminal notification unit 551, along with the processing described above. Furthermore, whenever receiving the visiting notification, terminal notification unit 551 notifies electronic lock controller 553, which will be described below, that the visiting notification is received.

When a request to start peer-to-peer communication (which is hereinafter expressed as P2P communication) is transmitted from wireless terminal 700, telephone conversation relay unit 552 of master device side controller 550 determines whether or not to accept the request. In a case where the request in question is accepted, telephone conversation relay unit 552 transmits a response that the request is accepted to wireless terminal 700. Along with this, telephone conversation relay unit 552 starts to transfer an image that is sent from entrance slave device 400, to wireless terminal 700.

Furthermore, when receiving a telephone conversation starting instruction from wireless terminal 700, telephone conversation relay unit 552 starts telephone conversation relay processing for realizing an image-accompanied telephone conversation between entrance slave device 400 and wireless terminal 700. The telephone conversation relay processing in question is performed by transmitting to entrance slave device 400 the digital audio data that is received from wireless terminal 700 and by transmitting to wireless terminal 700 the digital audio data and the digital image data that are received from entrance slave device 400.

Furthermore, when receiving from wireless terminal 700 an image transmission request that makes a request to transmit the image of the vicinity of the entrance, telephone conversation relay unit 552 transmits the audio image transmission instruction described above to entrance slave device 400. Telephone conversation relay unit 552 transmits to wireless terminal 700 the digital image data that is received from entrance slave device 400.

When receiving the terminal's unlocking instruction from wireless terminal 700 through master device wireless unit 542, electronic lock controller 553 of master device side controller 550 transmits the unlocking request to electronic lock 300 of entrance door 210 and causes electronic lock 300 to be unlocked. However, when receiving the terminal's unlocking instruction, electronic lock controller 553 causes electronic lock 300 to be unlocked under the condition that the visiting notification is received from entrance slave device 400. Furthermore, in a case where, with the unlocking request, electronic lock 300 is caused to be unlocked, it is desirable that electronic lock controller 553 transmits the locking request to electronic lock 300 of entrance door 210 when a prescribed time, for example, 20 seconds, elapsed and causes electronic lock 300 to be in a locked state.

Furthermore, when receiving a terminal's locking instruction from wireless terminal 700 through master device wireless unit 542, electronic lock controller 553 transmits the locking request to electronic lock 300 of entrance door 210 without depending on whether or not the visiting notification is received, and causes electronic lock 300 to be in the locked state.

Master device side packet configurator 560 suitably divides and packetizes the digital audio data (and the control data) that is output from master device side controller 550, codes generated packet data, and generates a downlink signal. Master device side packet configurator 560 outputs the generated downlink signal to master device side transmission driver 570.

Master device side transmission driver 570 buffers the downlink signal that is output from master device side packet configurator 560, performs gain adjustment of the buffered downlink signal, and transmits a result of the gain adjustment to entrance slave device 400 through master device side cable connector 510.

Master device side reception driver 580 buffers an uplink signal that is sent from entrance slave device 400 through master device side cable connector 510, by performing the gain adjustment, and outputs a result of the buffering to master device side extractor 590.

Master device side extractor 590 extracts the digital audio data and the digital image data of entrance slave device 400, which are included in the uplink signal, from the downlink signal that is output from master device side reception driver 580, and outputs to master device side controller 550 the digital data and the digital image data that are extracted.

Electronic lock cord connector 595, for example, includes a JEM-A adapter that includes a JEM-A standard HA terminal-A, and connects between one end of electronic lock cord 301 and master device side controller 550, in a state where a signal is transferable.

Transmission and reception of various pieces of information between intercom master device 500 itself and entrance slave device 400 by master device side controller 550 described above are performed through mater device side packet configurator 560, master device side transmission driver 570, master device side cable connector 510, master device side reception driver 580, and master device side data extractor 590.

However, master device side controller 550 retains the transmission control information described above in advance, and controls operation of master device side transmission driver 570 in such a manner that the transmission of the downlink signal and the reception of the uplink signal are performed in a time-division manner. According to the transmission control information, the control in question, for example, is performed by outputting enable signal 571 or the like that controls the operation (driving of a signal) of master device side transmission driver 570.

Furthermore, transmission and reception of various pieces of information between intercom master device 500 itself and wireless terminal 700 by master device side controller 550 described above is performed through master device wireless unit 542. The transmission and reception of various pieces of information between master device 500 itself and electronic lock 300 by master device side controller 550 described above are performed through electronic lock cord connector 595.

Furthermore, delivery of data between each of the units described above by intercom master device 500 is performed by performing the digital transfer, except between each of master device side speaker 502 and master device side microphone 503 and master device side audio I/F unit 530.

With this configuration, when receiving the visiting notification from entrance slave device 400, intercom master device 500 can transmit the terminal-destined visiting notification to wireless terminal 700, and when receiving the terminal's unlocking instruction from wireless terminal 700, can cause electronic lock 300 to be unlocked under the condition that the visiting notification is received.

### Configuration of a Wireless Communication Router

As a configuration of wireless communication router 610, a configuration of a well-known wireless communication router that relays communication in a wireless manner can be employed.

### Configuration of the Authentication Server

As a configuration of authentication server 600, a configuration of the well-known wireless communication router that relays communication and a configuration of an authentication server can be employed.

Authentication server 600, for example, has an authentication processor (not illustrated) that performs the authentication processing on a wireless terminal (for example, wireless terminal 700) that requests access to intercom master device 500, based on authentication information that is exchanged in advance between authentication server 600 itself and wireless terminal 700. As the authentication processing in question, for example, Secure Socket Later (SLL) authentication, authentication that uses a password which is exchanged in advance between authentication server 600 and wireless terminal 700, or the like can be employed.

Authentication server 600 has a terminal communication relay unit (not illustrated) that, under the condition that authentication of the wireless terminal 700 succeeds, establishes a connection to wireless terminal 700 and performs relay of the communication between wireless terminal 700 and intercom master device 500 (through wireless communication router 610).

Authentication server 600 exchanges key information (the encryption key and the decoding key) with intercom master device 500 or wireless terminal 700. When communication between intercom master device 500 and wireless terminal 700 is relayed, authentication server 600 performs the data encryption/decoding. That is, authentication server 600 decodes the encryption data that is received from intercom master device 500, encrypts the decoded encryption data, and transmits a result of the encryption to wireless terminal 700. Furthermore, authentication server 600 decodes the encryption data that is received from wireless terminal 700, encrypts the decoded encryption data, and transmits a result of the encryption to intercom master device 500.

When receiving the terminal-destined visiting notification from intercom master device 500, authentication server 600 transfers the notification to wireless terminal 700, but the transfer in question may take place before or after the communication between wireless terminal 700 and intercom master device 500 is established.

### Configuration of the Wireless Terminal

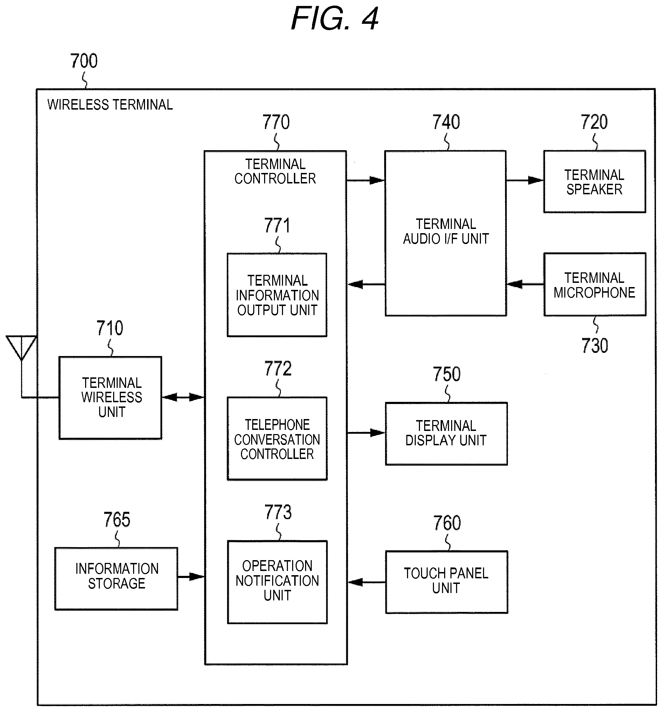

FIG. 4 is a block diagram illustrating an example of a configuration of wireless terminal 700.

As illustrated in FIG. 4, wireless terminal 700 has terminal wireless unit 710, terminal speaker 720, terminal microphone 730, terminal audio I/F unit 740, terminal display unit 750, touch panel unit 760, and terminal controller 770.

Terminal wireless unit 710 includes a wireless communication circuit and an antenna, and makes a connection to a wireless base station (not illustrated) that is connected to public network 620 through wireless communication line 701 described above in such a manner that communication with the wireless base station itself is possible. Terminal wireless unit 710 makes a connection to authentication server 600 through the wireless base station and public network 620 in such a manner that communication with authentication server 600 itself is possible. In addition, terminal wireless unit 710 makes a connection to intercom master device 500 through authentication server 600, public network 620, and wireless communication router 610 in such a manner that communication with intercom master device 500 itself is possible while the relay of the communication by authentication server 600 is performed.

Terminal speaker 720 converts analog audio data that is output from terminal audio I/F unit 740 into audio, and outputs a result of the conversion.

Terminal microphone 730 collects ambient audio, converts the ambient audio into analog audio data, and outputs a result of the conversion to terminal audio I/F unit 740.

Terminal audio I/F unit 740 converts digital audio data that is output from terminal controller 770, into analog audio data, performs adjustment of a signal level of the analog audio data, and outputs the signal level-adjusted analog audio data to terminal speaker 720. Furthermore, terminal audio I/F unit 740 adjusts a signal level of analog audio data that is output from terminal microphone 730, converts the signal level-adjusted analog audio data into digital audio data, and outputs a result of the conversion to terminal controller 770. The analog conversion and the digital conversion in question are performed by A/D and D/A converters (not illustrated), respectively.

Terminal audio I/F unit 740 may output data that is obtained by performing prescribed audio compression processing on data that results from performing the digital conversion on analog audio data which is output from terminal microphone 730, as digital audio data, to terminal controller 770. Furthermore, in a case where the digital audio data that is output from terminal controller 770 is data that is obtained by performing the prescribed audio compression processing, terminal audio I/F unit 740 may perform prescribed audio decompression processing on the data, and then perform the digital/analog conversion.

The terminal display unit 750 includes a liquid crystal display portion of the liquid crystal display equipped with the touch panel, which is described above, and reproduces digital image data that is output from terminal controller 770. In a case where the digital image data that is output from terminal controller 770 is data that is obtained by performing prescribed moving-image compression processing, prescribed moving-image decompression processing is performed on the data and image displaying of the resulting data is performed. Furthermore, under the control of terminal controller 770, terminal display unit 750 displays the terminal monitor button, the terminal telephone conversation button, the terminal unlocking button, and the terminal locking button, which are described above.

Various operations for wireless terminal 700 are performed on touch panel unit 760. For example, when the terminal monitor button, the terminal telephone conversation button, the terminal unlocking button, or the terminal unlocking button is displayed on terminal display unit 750, a clicking operation is performed on each of these on touch panel unit 760. When the operation in question is performed, touch panel unit 760 notifies terminal controller 770 that the operation in question is performed.

An encryption key (hereinafter referred to as a "third encryption key") and a decoding key (hereinafter referred to as a "third decoding key"), which are exchanged in advance between wireless terminal 700 itself and intercom master device 500 and an encryption key (hereinafter referred to as a "fourth encryption key") and a decoding key (hereinafter referred to as a "fourth encoding key"), which are exchanged in advance between wireless terminal 700 itself and authentication server 600, are included in information storage 765. The third encryption key pairs up with the first decoding key, and the third decoding key pairs up with the first encryption key.

When an operation of making a request to start a connection to intercom master device 500 is performed in touch panel unit 760, authentication processing by authentication server 600 is performed on terminal controller 770. When the authentication by authentication server 600 succeeds, relay of communication between wireless terminal 700 and intercom master device 500 by authentication server 600 is started.

Terminal controller 770 performs the data encryption/decoding in communication with intercom master device 500. That is, terminal controller 770 decode the encryption data that is received from intercom master device 500 through authentication server 600, using the third decoding key and the fourth decoding key. Furthermore, terminal controller 770 encrypts data that is to be transmitted to intercom master device 500 through authentication server 600, using the third encryption key and the fourth encryption key.

When relay of the communication is started, terminal controller 770 next transmits a log-in request to intercom master device 500.

When receiving the terminal-destined visiting notification from intercom master device 500, terminal information output unit 771 of terminal controller 770 causes call sound indicating that a person came to entrance door 210, to be output from terminal speaker 720. Accordingly, terminal information output unit 771 notifies user 220 that visitor 230 is at entrance door 210. Furthermore, terminal information output unit 771 displays the terminal monitor button, the terminal telephone conversation button, and the terminal unlocking button, which are described above, on terminal display unit 750.

When a checking operation, such as clicking on the terminal monitor button, is performed in wireless terminal 700, telephone conversation controller 772 of terminal controller 770 transmits a request to start the P2P communication to intercom master device 500. Accordingly, the P2P communication between wireless terminal 700 itself and intercom master device 500 is started, and telephone conversation controller 772 starts to output the image of the entrance that is sent from intercom master device 500. Audio output, for example, is performed by terminal information output unit 771 outputting a digital audio signal for the call sound to terminal audio I/F unit 740. Furthermore, the audio output, for example, is performed by terminal information output unit 771 outputting a digital image data from intercom master device 500 to master device side display unit 540.

Furthermore, when a response operation, such as clicking on the terminal telephone conversation button, is performed in wireless terminal 700, telephone conversation controller 772 of terminal controller 770 transmits the telephone conversation starting instruction described above to intercom master device 500, and causes a telephone conversation between wireless terminal 700 and entrance slave device 400 to start through intercom master device 500. That is, telephone conversation controller 772 causes the image of the vicinity of the entrance and audio that occurs in the vicinity of the entrance, which are sent from intercom master device 500, to be output from terminal display unit 750 and terminal speaker 720, respectively. Along with this, telephone conversation controller 772 transmits audio that occurs in the vicinity of wireless terminal 700, which is input by terminal microphone 730, to intercom master device 500.

In a state where the terminal-destined visiting notification is not received, when the checking operation, such as clicking on the terminal monitor button, is performed, telephone conversation controller 772 transmits the image transmission request described above to intercom master device 500. The image of the vicinity of the entrance that is sent from intercom master device 500 in response to the request in question is output from terminal display unit 750.

When an unlocking instruction operation, such as clicking on the terminal unlocking button, is performed in wireless terminal 700, operation notification unit 773 of terminal controller 770 transmits the terminal's unlocking instruction described above to intercom master device 500.

Furthermore, when a locking instruction operation is performed in wireless terminal 700, operation notification unit 773 of terminal controller 770 transmits the terminal's locking instruction described above to intercom master device 500. The locking instruction operation, for example, is a clicking operation that is performed on the terminal locking button which is displayed on terminal display unit 750.

Theses functional units of terminal controller 770, for example, are realized by application software that is installed in advance on wireless terminal 700. Furthermore, the transmission and reception of various pieces of information between authentication server 600 and intercom master device 500 by terminal controller 770 described above are performed through terminal wireless unit 710.

With this configuration, when receiving the terminal-destined visiting notification from intercom master device 500, wireless terminal 700 can output information indicating that a person came to entrance door 210, and when the unlocking instruction operation is performed in wireless terminal 700, can transmit the terminal's unlocking instruction to intercom master device 500.

### Operation of the Intercom Master Device

Next, the operation of intercom master device 500 will be described. At this point, a description is provided with a focus on a main operation relating to communication with wireless terminal 700.

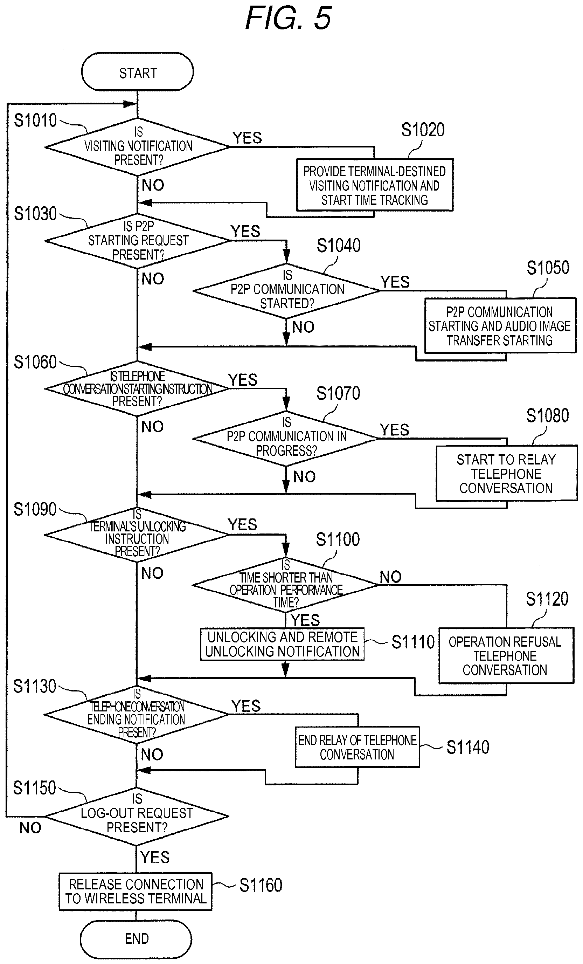

FIG. 5 is a flowchart indicating an example of the operation of intercom master device 500. Intercom master device 500, for example, performs the authentication processing on wireless terminal 700 in response to the log-in request from wireless terminal 700, and starts processing, which will be described below, whenever the authentication succeeds. In a case where the authentication fails, intercom master device 500, for example, transmits a response indicating the failure of the authentication to wireless terminal 700.

In Step S1010, terminal notification unit 551 determines whether or not the visiting notification is received from entrance slave device 400. In a case where the visiting notification is received (YES in S1010), terminal notification unit 551 causes the processing to proceeds to Step S1020. Furthermore, in a case where the visiting notification is not received (NO in S1010), terminal notification unit 551 causes the process to proceed to Step S1030 that will be described below.

In Step S1020, terminal notification unit 551 transmits the terminal-destined visiting notification to wireless terminal 700 through authentication server 600. Furthermore, electronic lock controller 553 starts to track time using a timer or the like.

In Step S1030, telephone conversation relay unit 552 determines whether or not a P2P starting request that makes a request to start the P2P communication is received from wireless terminal 700. In a case where the P2P starting request is received (YES in S1030), telephone conversation relay unit 552 causes the processing to proceed to Step S1040. Furthermore, in a case where the P2P starting request is not received (NO in S1030), telephone conversation relay unit 552 causes the processing to proceed to Step S1060 that will be described below.

In Step S1040, telephone conversation relay unit 552 determines whether or not to start the P2P communication with wireless terminal 700. In a case where the P2P communication is started (YES in Step S1040), telephone conversation relay unit 552 causes the processing to proceed to Step S1050. Furthermore, in a case where the P2P communication is not started (NO in Step S1040), telephone conversation relay unit 552 causes the processing to proceed to Step S1060 that will be described below. In the case where the P2P communication is not started, telephone conversation relay unit 552 may transmit an operation refusal notification to wireless terminal 700 in the same manner as in Step S1120 that will be described below.

In Step S1050, telephone conversation relay unit 552 starts the P2P communication. Along with this, telephone conversation relay unit 552 starts to transfer an audio image that is sent from entrance slave device 400, to wireless terminal 700. However, telephone conversation relay unit 552 may not necessarily start audio transfer.

In Step S1060, telephone conversation relay unit 552 determines whether or not the telephone conversation starting instruction is received from wireless terminal 700. In a case where the telephone conversation starting instruction is received (YES in S1060), telephone conversation relay unit 552 causes the processing to proceed to Step S1070. Furthermore, in a case where the telephone conversation starting instruction is not received (NO in S1060), telephone conversation relay unit 552 causes the processing to proceed to Step S1090 that will be described below.

In Step S1070, telephone conversation relay unit 552 determines whether or not the P2P communication with wireless terminal 700 is started. In a case where the P2P communication is started (YES in S1070), the conversation relay unit 552 causes the processing to proceeds to Step S1080. Furthermore, in a case where the P2P communication is not started (NO in S1070), the conversation relay unit 552 causes the processing to proceed to Step S1090 that will be described below. In the case where the P2P communication is not started, telephone conversation relay unit 552 may transmit the operation refusal notification to wireless terminal 700 in the same manner as in Step S1120 that will be described below.

In Step S1080, telephone conversation relay unit 552 starts telephone conversation relay (transfer of audio data and image data) between entrance slave device 400 and wireless terminal 700.

In Step S1090, electronic lock controller 553 determines whether or not the terminal's unlocking instruction is received from wireless terminal 700. In a case where the terminal's unlocking instruction is received (YES in S1090), electronic lock controller 553 causes the processing to proceed to Step S1100. Furthermore, in a case where the terminal's unlocking instruction is not received (NO in S1090), electronic lock controller 553 causes the processing to proceed to Step S1130 that will be described below.

In Step S1100, electronic lock controller 553 determines whether or not the time at which the time tracking is finally started in Step S1020 is shorter than an operation performance time that is prescribed in advance as a time length during which electronic lock 300 has to be unlocked with a remote operation from wireless terminal 700. That is, electronic lock controller 553 determines whether or not to perform the unlocking. The operation performance time is a maximum value of a time that corresponds to a period of time from when user 220 of wireless terminal 700 knows the presence of a visitor and to when a suitable telephone conversation or the like is carried out and thus the unlocking instruction operation is performed with wireless terminal 700, and for example, is one minute.

In a case where the time is shorter than the operation performance time (YES in S1100), electronic lock controller 553 causes the processing to proceed to Step S1110. Furthermore, in a case where the time exceeds the operation performance time, or in a case where the time tracking in Step S1020 is not started (NO in S1100), electronic lock controller 553 causes the processing to proceed to Step S1120 that will be described below.

In Step S1110, electronic lock controller 553 unlocks electronic lock 300. Along with this, electronic lock controller 553 transmits a terminal-destined unlocking notification to wireless terminal 700. Electronic lock controller 553 may transmit the unlocking request to electronic lock 300, and based on the fact that electronic lock 300 replies with an unlocking response indicating that the unlocking is performed, may determine that the unlocking is performed.

In S1120, electronic lock controller 553 transmits the operation refusal notification to wireless terminal 700 without causing electronic lock 300 to be unlocked.

In Step S1130, telephone conversation relay unit 552 determines whether or not a telephone conversation ending notification is received. For example, in a case where an operation of ending a telephone conversation is performed in wireless terminal 700, the telephone conversation ending notification is transmitted from wireless terminal 700. In a case where the telephone conversation ending notification is received (YES in S1130), the conversation relay unit 552 causes the processing to Step S1140. Furthermore, in a case where telephone conversation ending notification is not received (NO in S1130), the conversation relay unit 552 causes the processing to proceed to Step S1150 that will be described below.

In Step S1140, telephone conversation relay unit 552 ends the telephone conversation relay between entrance slave device 400 and wireless terminal 700.

In Step S1150, master device side controller 550 determines whether or not a log-out request is received. For example, in a case where a log-out operation is performed in wireless terminal 700, the log-out request is transmitted from wireless terminal 700. In a case where the log-out request is not received (NO in S1150), master device side controller 550 causes the processing to return to Step S1010. Furthermore, in a case where the log-out request is received (YES in S1150), master device side controller 550 causes the processing to proceed to Step S1160.

In Step S1160, master device side controller 550 releases the connection to wireless terminal 700.

With this operation, intercom master device 500 makes a connection to wireless terminal 700 that is carried outside building 200 in such a manner that communication with wireless terminal 700 is possible, and the identifying of visitor 230 at entrance door 210, the telephone conversation with visitor 230, and the operation of unlocking entrance door 210 are possible from wireless terminal 700. Furthermore, intercom master device 500 can limit the unlocking due to the remote operation in question to be within a prescribed period of time after the call button of entrance slave device 400 is operated.

Intercom master device 500 may start the time tracking, with other timings corresponding to the visiting notification, such as a timing at which telephone conversation relay is started, serving as a reference. Furthermore, intercom master device 500 may determine that the visiting notification is received, based on other events, such as being in a telephone conversation state, without particularly performing the time tracking. Subsequently, intercom master device 500 may cause the processing to proceed to Step S1110 and may perform the unlocking based on operation of wireless terminal 700.

### Operation of the System

Next, operation of intercom system 100 will be described below.

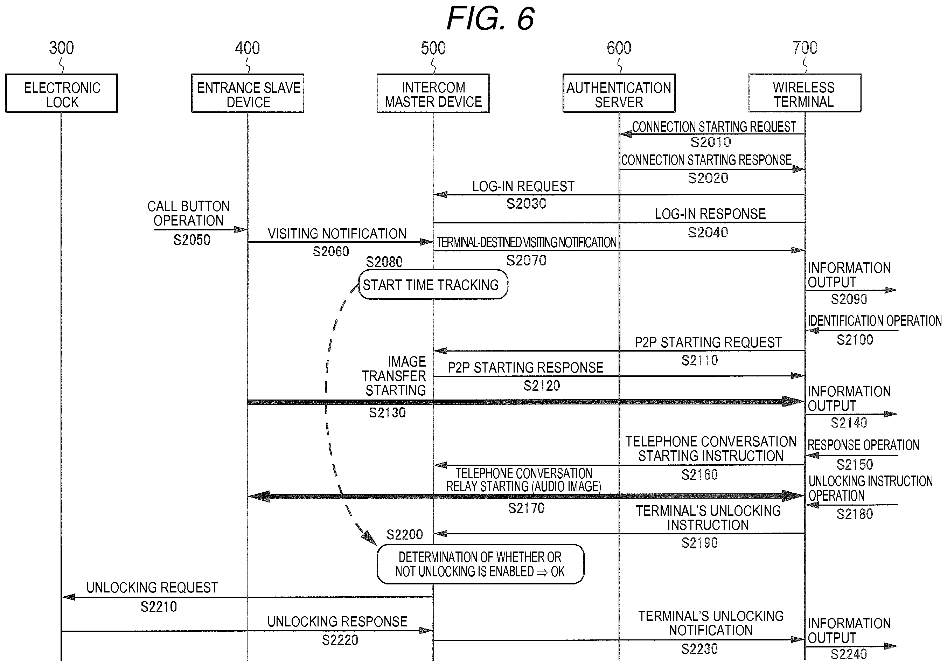

FIG. 6 is a sequence diagram illustrating an example of the operation of intercom system 100, and illustrates an example of a case where the unlocking operation is performed when visitor 230 is at entrance door 210.

In wireless terminal 700, when application software for checking the vicinity of the entrance and performing operation of electronic lock 300 of entrance door 210 is activated, a connection starting request is transmitted from wireless terminal 700 to authentication server 600 (S2010). When authentication server 600 succeeds in authentication of wireless terminal 700, authentication server 600 replies with a connection starting response (S2020). Accordingly, a state where the relay of the communication by authentication server 600 is possible is attained.

Although not illustrated, intercom master device 500 makes a request to authentication server 600 for the same connection as well when powered on and so forth, and authentication server 600 performs the authentication on intercom master device 500 as well.

In addition, the log-in request is transmitted from wireless terminal 700 to intercom master device 500 (S2030). When intercom master device 500 succeeds in the authentication of wireless terminal 700, intercom master device 500 replies with a log-in response indicating the success in authentication (S2040).

When in this state, the call button of entrance slave device 400 is operated (S2050), the visiting notification is transmitted to intercom master device 500 (S2060), and the terminal-destined visiting notification is transmitted from intercom master device 500 that receives the visiting notification to wireless terminal 700 (S2070). Along with this, an audio-accompanied image that is acquired in entrance slave device 400 starts to be transmitted to intercom master device 500 as well. Furthermore, in intercom master device 500, the time tracking of the time that has elapsed after the visiting notification was received is started (S2080). In wireless terminal 700 that receives the terminal-destined visiting notification, information indicating that visitor 230 is at entrance door 210 is output (S2090).

When the checking operation described above is performed by user 220 who receives an information output notifying the presence of a visitor (S2100), the P2P starting request is transmitted from wireless terminal 700 to intercom master device 500 (S2110). Intercom master device 500 replies with a P2P starting response (S2120). Along with this, audio and an image start to be transferred from entrance slave device 400 to wireless terminal 700 (S2130). As a result, in wireless terminal 700, the image of the vicinity of the entrance or the like starts to be output (S2140).

It is desirable that at this stage, intercom master device 500 does not output audio which occurs in the vicinity of the entrance. Audio data may be controlled in such a manner that in intercom master device 500, the audio data is not transferred to wireless terminal 700, and may be controlled in such a manner that in wireless terminal 700, the audio data is not output as audio.

FIG, 7 is a plan diagram illustrating an example of a display state of wireless terminal 700 that results when the terminal-destined visiting notification is received and the checking operation is performed.

As illustrated in FIG, 7, image 811 that is captured with entrance slave device 400 and place icon 812 indicating entrance slave device 400 that is a transmission source of an image are displayed on touch panel-attached display 751 of wireless terminal 700. Furthermore, monitor icon 813 that is the terminal monitor button, telephone conversation icon 814 that is the terminal telephone conversation button, and electronic lock icon 815 that serves as both terminal locking button and terminal unlocking button are displayed on touch panel-attached liquid display 751.

When the information in question is receives as an output and the response operation (clicking on telephone conversation icon 814) is performed by user 220 in wireless terminal 700 (S2150 in FIG. 6), the telephone conversation starting instruction is transmitted from wireless terminal 700 to intercom master device 500 (S2160). As a result, intercom master device 500 starts to transfer audio from wireless terminal 700 to entrance slave device 400 and starts to relay the telephone communication between wireless terminal 700 and entrance slave device 400 (S2170).

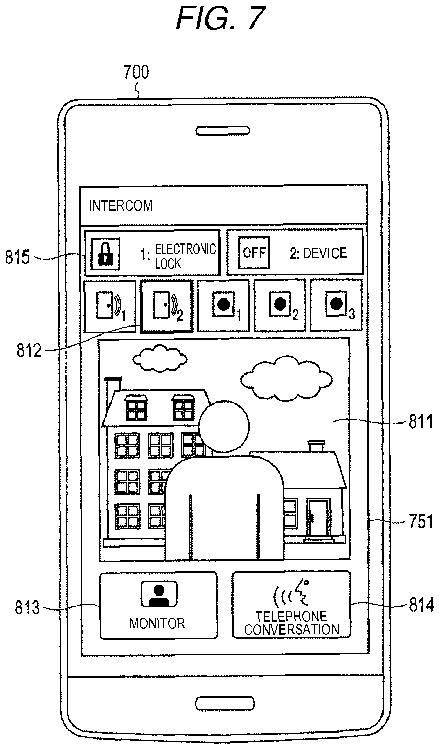

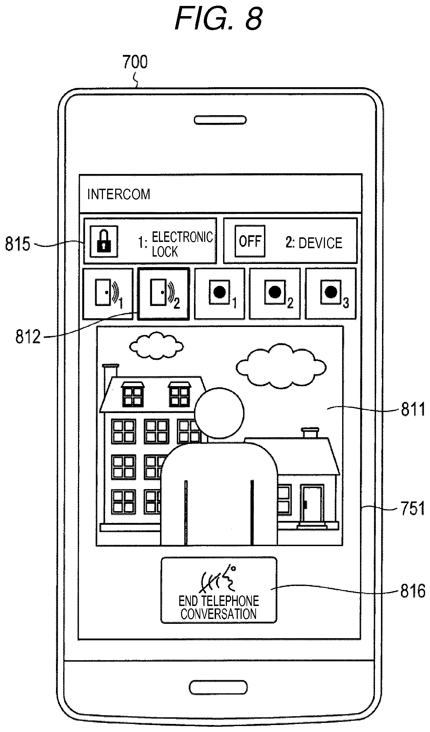

FIG. 8 is a plan diagram illustrating an example of the display state of wireless terminal 700 that results when the telephone conversation with entrance slave device 400 is started, and is a diagram that corresponds to FIG. 7.

As illustrated in FIG. 8, instead of monitor icon 813 and telephone conversation icon 814 in FIG. 7, telephone conversation ending icon 816 for performing an operation of ending a telephone conversation is displayed on touch panel-attached liquid crystal display 751 of wireless terminal 700.

When the unlocking instruction operation (clicking on electronic lock icon 815) is performed, by user 220 who identifies visitor 230, in wireless terminal 700 (S2180 in FIG. 6), the terminal's unlocking instruction is transmitted from wireless terminal 700 to intercom master device 500 (S2190). In order to prevent the unlocking instruction operation from being performed erroneously, when performing the unlocking instruction operation, wireless terminal 700 may display a pop screen for the double-checking of the operation by user 220.

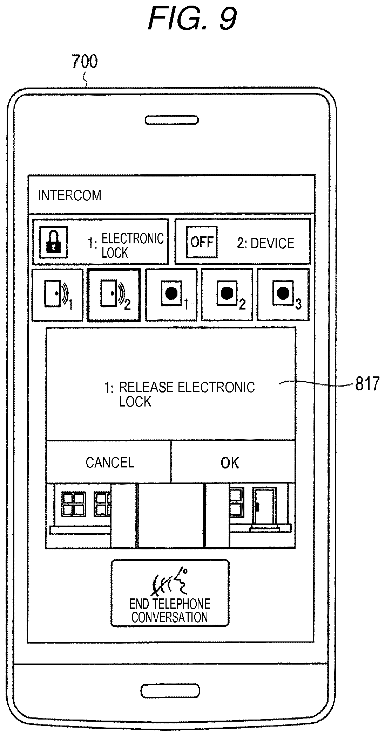

FIG. 9 is a plan diagram illustrating an example of the display state of wireless terminal 700 that results when the unlocking instruction operation is performed, and is a diagram that corresponds to FIGs. 7 and 8.

As illustrated in FIG. 9, pop screen 817 for checking the unlocking instruction operation is displayed on touch panel-attached liquid display 751 of wireless terminal 700. Operation notification unit 773 of wireless terminal 700 transmits the terminal's unlocking instruction to intercom master device 500 under the condition that an operation (clicking on an OK button) indicating that the unlocking is intended is performed on pop screen 817.

In a case where the time that has elapsed after the visiting notification was received is shorter than the operation performance time, the result of intercom master device 500 determining whether or not the unlocking is enabled is that the unlocking is approved (OK) (S2200 in FIG. 6). Thus, the unlocking request is transmitted from intercom master device 500 to electronic lock 300 (S2210).

In electronic lock 300 that receives the unlocking request in question, the unlocking of entrance door 210 is performed, and the unlocking response indicating that the unlocking is completed is sent, as a response, to intercom master device 500 (S2220). The terminal-destined unlocking notification is transmitted from intercom master device 500 wireless terminal 700 (S2230), and information indicating that the unlocking operation succeeds is output from wireless terminal 700 (S2240).

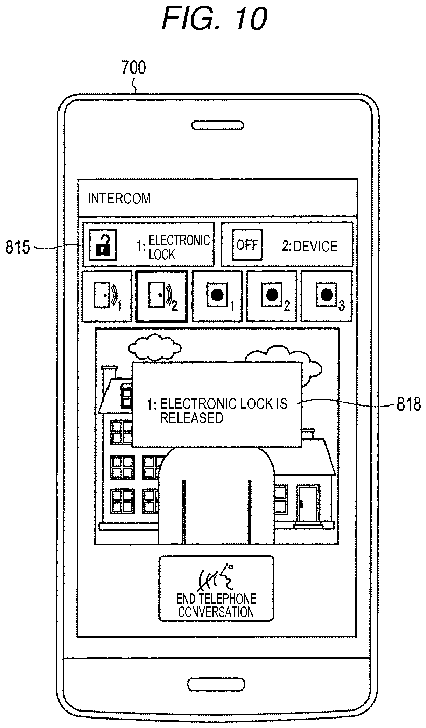

FIG. 10 is a plan diagram illustrating an example of the display state of wireless terminal 700 that results when the unlocking operation succeeds, and is a diagram that corresponds to FIGs. 7 to 9.

As illustrated in FIG. 10, pop screen 818 indicating that the unlocking of electronic lock 300 succeeds is displayed on touch panel-attached liquid display 751 of wireless terminal 700. Furthermore, the touch panel-attached liquid display 751 causes electronic lock icon 815 in FIGs. 7 to 9 to be changed from an external appearance indicating that electronic lock 300 is locked to an external appearance indicating that electronic lock 300 is unlocked.

With this operation, in intercom system 100, when visitor 230 is at entrance door 210, a notification can be provided from wireless terminal 700 to user 220, and electronic lock 300 of entrance door 210 can be caused to be unlocked according to an operation in wireless terminal 700 of user 220.

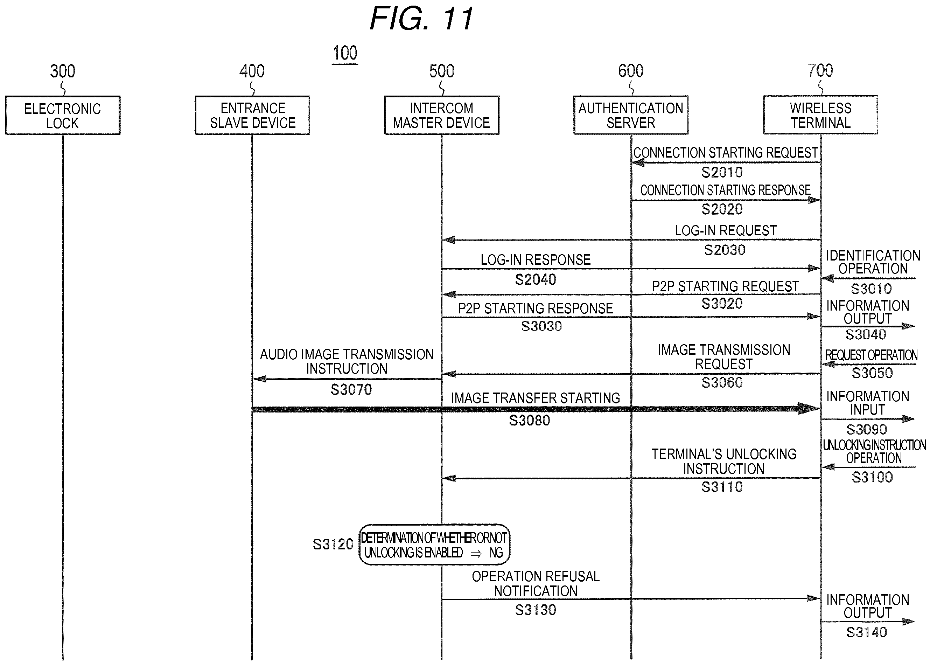

FIG. 11 is a sequence diagram illustrating an example of the operation of intercom system 100, and illustrates an example of a case where the unlocking operation is performed when visitor 230 is not at entrance 210. The same portion as in FIG. 6 is given the same step number, and a description thereof is omitted.

In order to remotely check the appearance of the vicinity of the entrance of building 200, a prescribed checking operation (for example, clicking on place icon 812 indicating entrance slave device 400) is performed by a user (for example, user 220) of wireless terminal 700 in wireless terminal 700 (S3010). When this is done, the P2P starting request and the P2P starting response are exchanged (S3020 and S3030), and information indicating that the P2P communication with intercom master device 500 is established is output from wireless terminal 700 (S3040).

In addition, in wireless terminal 700, when a request operation (for example, clicking on monitor icon 813) of requesting the image of the vicinity of the entrance is performed (S3050), the image transmission request is transmitted from wireless terminal 700 to intercom master device 500 (S3060), and the audio image transmission instruction is transmitted from intercom master device 500 to entrance slave device 400 (S3070). As a result, the image of the vicinity of the entrance is transferred from entrance slave device 400 to wireless terminal 700 (S3080), and the image of the vicinity of the entrance is output from wireless terminal 700 (S3090).

When the unlocking instruction operation is performed by the user of wireless terminal 700 in wireless terminal 700 (S3100), the terminal's unlocking instruction is transmitted from wireless terminal 700 to intercom master device 500 (S3110). However, visitor 230 is not at entrance door 210, and the visiting notification is not received in intercom master device 500. For this reason, the result of intercom master device 500 determining whether or not the unlocking is enabled is that the unlocking is not approved (NG) (S3120). The operation refusal notification is transmitted from intercom master device 500 to wireless terminal 700 (S3130), and information indicating that the unlocking fails (an operational error) is output from wireless terminal 700 (S3140).

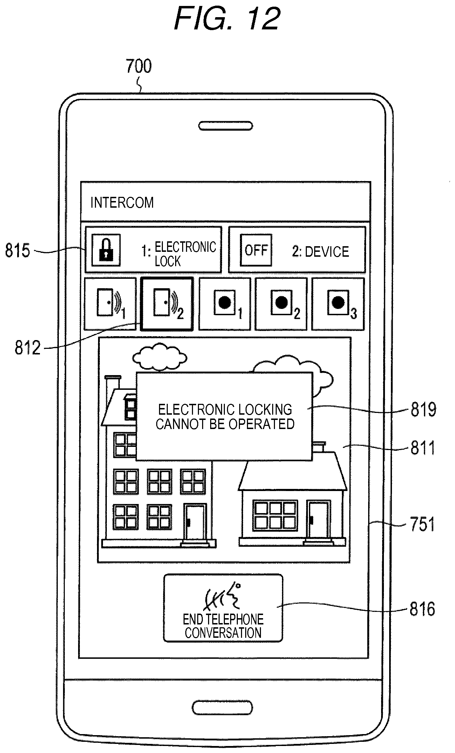

FIG. 12 is a plan diagram illustrating an example of the display state of wireless terminal 700 that results when the unlocking operation fails, and is a diagram that corresponds to FIGs. 7 to 10.

As illustrated in FIG. 12, pop screen 819 indicating that the unlocking of electronic lock 300 fails is displayed on touch panel-attached liquid display 751 of wireless terminal 700.

With this operation, intercom system 100 can prohibit the unlocking of electronic lock 300 of entrance door 210, which is based on the operation of wireless terminal 700, while visitor 230 is not at entrance door 210.

In the sequence diagrams in FIGs. 6 to 11, all pieces of data that are to be transmitted from intercom master device 500 toward wireless terminal 700 are encrypted using the first encryption key and the second encryption key. Furthermore, all pieces of data that are to be transmitted from wireless terminal 700 toward intercom master device 500 are encrypted using the third encryption key and the fourth encryption key.

Processing that registers the Wireless Terminal with Intercom Master Device

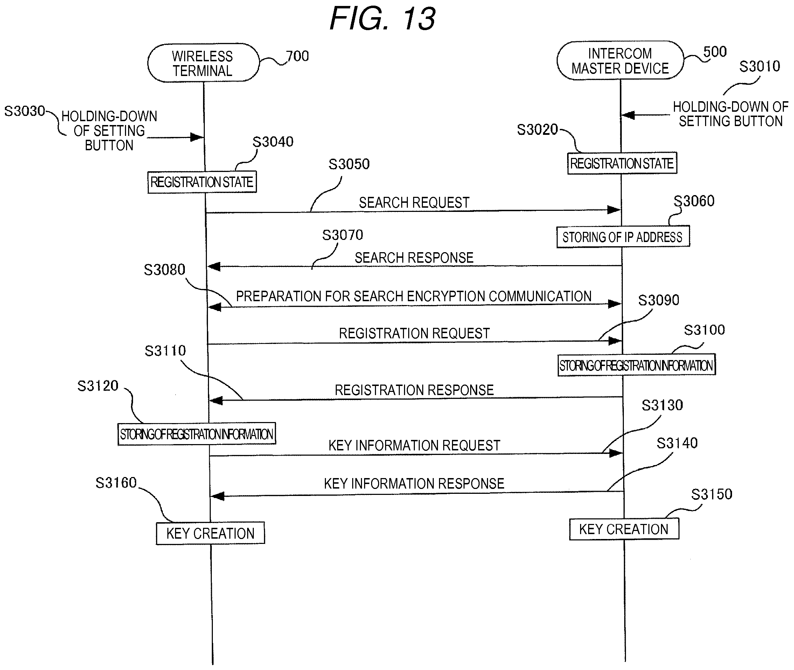

Next, the flow for the initial settings up to and including the registration of wireless terminal 700 by intercom master device 500 will be described with reference to FIG. 13. FIG. 13 is a sequence diagram illustrating the flow for the initial settings.

First, the user holds down a setting button for registration, of intercom master device 500 (S3010). Accordingly, intercom master device 500 enters a registration state (a waiting state) where communication with wireless terminal 700 is possible (S3020).

Next, when the user holds down a setting button for registration, of wireless terminal 700 (S3030), wireless terminal 700 enters a registration state where the communication with intercom master device 500 is possible (S3040), and performs multicast transmission of a search request including an IP address of wireless terminal 700 (S3050).

When receiving the search request, intercom master device 500 stores the IP address of wireless terminal 700 that is included in the search request (S3060), and transmits a search response (S3070). Although the search request is received, intercom master device 500 that is not in a registration state does not transmit the search response. Furthermore, although a fixed time has elapsed after the search request was transmitted, in a case where the search response cannot be received, wireless terminal 700 cancels the registration state in order to prevent an unintended device from being registered.

After wireless terminal 700 receives the search response, encryption communication preparation processing (an exchange of information (a certificate or the like) necessary for the encryption communication) that uses an encryption communication path in compliance with Transport Layer Security (TLS) or the like is performed between intercom master device 500 and wireless terminal 700 (S3080). Accordingly, the encryption communication is performed between intercom master device 500 and wireless terminal 700.

When the encryption communication preparation processing is completed, wireless terminal 700 transmits a registration request including registration information of wireless terminal 700 to intercom master device 500 (S3090).

When receiving the registration request, intercom master device 500 stores the registration information of wireless terminal 700, which is included in the registration request (S3100), and transmits registration response including registration information of intercom master device 500 to wireless terminal 700 (S3110).

When receiving the registration response, wireless terminal 700 stores the registration information of intercom master device 500, which is included in the registration response (S3120), and transmits a key information request to intercom master device 500 (S3130).

When receiving the key information request, intercom master device 500 transmits a key information response including key information (random numbers) to wireless terminal 700 (S3140). Accordingly, during the encryption communication, the key information can be exchanged between intercom master device 500 and wireless terminal 700.

Thereafter, intercom master device 500 and wireless terminal 700 creates an encryption key and a decoding key using the key information, and retains the encryption key and the decoding key that are created (S3150 and S3160).

By performing Steps S3010 to S3160, the initial setting (registration processing for the registration of wireless terminal 700 with intercom master device 500) are completed.

### Effects of the Present Embodiment

As described above, according to the present embodiment, during the encryption communication, the key information can be exchanged between intercom master device 500 and wireless terminal 700. Accordingly, in addition to the first encryption communication path between intercom master device 500 and authentication server 600 and the second encryption communication path between authentication server 600 and wireless terminal 700, the third encryption communication path is established between intercom master device 500 and wireless terminal 700. Furthermore, the double encryption communication path is established between intercom master device 500 and authentication server 600 and between authentication server 600 and wireless terminal 700.

Furthermore, in authentication server 600, because the third encryption communication path is also established until the received encryption, after decoded, is again encrypted, there is a concern that the information will be acquired by the third party in the meantime.

However, according to the present embodiment, in a state where high safety is secured, an operation of unlocking the entrance door can be performed from the wireless terminal.

### Modification Example of the Present Embodiment

The configuration in which each device makes a connection in such a manner that the communication is possible is not limited to the example described above. For example, wireless terminal 700 may directly perform the communication with intercom master device 500 or wireless communication router 610, by performing short- or middle-distance wireless communication, such as one in compliance with WiFi (a registered trademark) or one that uses a wireless Local Area Network (LAN).

Furthermore, in order to prevent the third party from performing registration, wireless terminal 700 that is possibly registered with intercom master device 500 may be limited to being present on the same LAN.

Furthermore, the wireless terminal that receives the terminal-destined visiting notification from entrance slave device 400 and performs the information output, and that transmits the terminal's unlocking instruction to intercom master device 500 when the unlocking instruction operation is performed is not limited to the example described above. The wireless terminal in question may be a tablet type information terminal or a notebook personal computer, and may be a desktop type personal computer or the like that is installed outside building 200.

Furthermore, the device that imposes a limitation on the unlocking that depends on whether or not the visiting notification is received is assumed to be intercom master device 500 according to the embodiment, which is described above, but is limited to this. For example, in authentication server 600, wireless communication router 610, or wireless terminal 700, the terminal's unlocking instruction may be transmitted or transferred to intercom master device 500 under the condition that the terminal-destined visiting notification is received. Even in these cases, consequently, intercom master device 500 performs the operation of causing electronic lock 300 to be unlocked under the condition that the visiting notification is received.

Furthermore, one or several configurations of each device, which are described above, may be physically separated from one or several other configurations of the device. In this case, these configurations each need to individually include a communicator for performing the communication among themselves. Furthermore, for example, a plurality of devices may be configured into one piece, such as when electronic lock 300 and entrance slave device 400 are combined into one device.

### Others

In the embodiment described above, the case (a public encryption key scheme) where the encryption key and the decoding key are different from each other in the communication between intercom master device 500 and wireless terminal 700 is described, but the present disclosure is not limited to this, and can also find application in (a privacy encryption key scheme) in a case where the encryption key and the decoding key are the same.

Furthermore, in the embodiment described above, the case where the double encryption is performed between intercom master device 500 and authentication server 600 and between authentication server 600 and wireless terminal 700 is described above, but according to the present disclosure, double or more encryption can be performed. In a wireless section in the embodiment, when wireless encryption is included, triple encryption is performed.

Furthermore, in the embodiment described above, the case where the pieces of unlocking and unlocking information are communicated between intercom master device 500 and wireless terminal 700 using the encryption communication path in compliance with the TLS or the like, but the present disclosure is not limited to this and can also find application in a case where locking-target information that itself is transmitted along a non-encryption communication path. As an example of the non-encryption communication path, there is an electronic mail. Pretty Good Privacy (PGP) is a technology for preventing interception and falsification of a mail when communication is performed along the non-encryption communication path.

In the PGP, a public key and a private key that corresponds to the public key are shared in advance by a transmission source and a reception destination based on a public key scheme. After a signature is added to a mail on the transmission side, the mail is encrypted using a public key of the reception destination and then the encrypted mail is transmitted. In the reception destination, the encrypted mail is decoded (signature-verified) using a private key of the reception destination. In the present disclosure, the mail (the locking target information) is processed in the same manner as in the case where the signing, the encryption, the decoding, and the signature verification are performed with the PGP, and thus the interception and the falsification of the locking target information along the non-encryption communication path can be prevented.

The intercom system, the intercom master device, and the communication method in the present disclosure are useful as an intercom system, an intercom master device, and a communication method that are capable of performing an operation of unlocking an entrance door from a wireless terminal in a state where higher safety is secured.

## Claims

1. An intercom system (100) that includes an electronic lock (300), an entrance slave device (400), an intercom master device (500) that connects to the electronic lock (300) and the entrance slave device (400) in such a manner that communication with the electronic lock (300) and the entrance slave device (400) is possible, and an authentication server (600) that connects to the intercom master device (500) in such a manner that communication with the intercom master device (500) is possible,
wherein the authentication server (600) is configured to perform an exchange of second key information with the intercom master device (500) and to establish a first encryption communication path between the authentication server (600) itself and the intercom master device (500),
wherein the authentication server (600) is configured to perform an exchange of fourth key information with a wireless terminal (700) and to establish a second encryption communication path between the authentication server (600) itself and the wireless terminal (700), the wireless terminal (700) being configured to perform communication with the intercom master device (500) through the authentication server (600),
wherein the intercom master device (500) is configured to perform an exchange of first key information and third key information with the wireless terminal (700) and to establish a third encryption communication path between the intercom master device (500) itself and the wireless terminal (700), and
**characterized in that** the intercom master device (500) is configured to receive an instruction to unlock the electronic lock (300), which is transmitted through the first encryption communication path, the second encryption communication path, and the third encryption communication path, from the wireless terminal (700), wherein a double encryption communication path is established between the intercom master device (500) and the authentication server (600) and between the authentication server (600) and the wireless terminal (700) such that data transmitted from the intercom master device (500) through the authentication server (600) towards the wireless terminal (700) is encrypted using the first key information and the second key information, and data transmitted from the wireless terminal (700) through the authentication server (600) towards the intercom master device (500) is encrypted using the third key information and the fourth key information,
wherein, when it is detected that a person came to an entrance door (210), the entrance slave device (400) transmits a visiting notification to the intercom master device (500), and the intercom master device (500) starts a time tracking of the time that has elapsed after the visiting notification was received, and
wherein at a time of receiving the instruction to unlock the electronic lock (300), the intercom master device (500) compares the tracked time with an operation performance time that is prescribed in advance as a time length during which the electronic lock has to be unlocked with a remote operation from the wireless terminal (700), and causes the electronic lock (300) to be unlocked in case the tracked time is shorter than the operation performance time.

2. The system (100) of claim 1,
wherein during an encryption communication, the intercom master device (500) registers the wireless terminal (700) and performs the exchange of the key information between the intercom master device (500) itself and the wireless terminal (700).

3. The system (100) of claim 1,
wherein, when receiving the visiting notification, the intercom master device (500) transmits a terminal-destined visiting notification to the wireless terminal (700) through the first encryption communication path, the second encryption communication path, and the third encryption communication path.

4. The system (100) of claim 3,
wherein when receiving the terminal-destined visiting notification, the wireless terminal (700) outputs information indicating that the person came to the entrance door (210).

5. The system (100) of any of the preceding claims,
wherein the intercom master device (500) transmits an operation refusal notification to the wireless terminal (700) without causing the electronic lock (300) to be unlocked in case the tracked time is longer than the operation performance time.

6. The system (100) of any of the preceding claims,
wherein the intercom master device (500), in case a P2P starting request that makes a request to start the P2P communication is received from the wireless terminal (700), starts the P2P communication with the wireless terminal (700).

7. The system (100) of claim 6,
wherein the intercom master device (500), in case a telephone conversation starting instruction is received from the wireless terminal (700) and the P2P communication with the wireless terminal (700) is started, starts a telephone conversation relay including transfer of audio data and image data between the entrance slave device (400) and the wireless terminal (700).

8. A communication method for an intercom system (100) that includes an electronic lock (300), an entrance slave device (400), an intercom master device (500) that connects to the electronic lock (300) and the entrance slave device (400) in such a manner that communication with the electronic lock (300) and the entrance slave device (400) is possible, and an authentication server (600) that connects to the intercom master device (500) in such a manner that communication with the intercom master device (500) is possible, wherein an exchange of second key information is performed and a first encryption communication path is established between the authentication server (600) and the intercom master device (500), an exchange of fourth key information is performed and a second encryption communication path is established between the authentication server (600) and a wireless terminal (700) which makes a connection to the authentication server (600) in such a manner that communication with the authentication server (600) is possible and which performs communication with the intercom master device (500) through the authentication server (600), and an exchange of a first key information and a third key information is performed and a third encryption communication path is established between the intercom master device (500) and the wireless terminal (700),
**characterized in that** the intercom master device (500) receives an instruction to unlock the electronic lock (300) from the wireless terminal (700) through the first encryption communication path, the second encryption communication path, and the third encryption communication path, wherein a double encryption communication path is established between the intercom master device (500) and the authentication server (600) and between the authentication server (600) and the wireless terminal (700) such that data transmitted from the intercom master device (500) through the authentication server (600) towards the wireless terminal (700) is encrypted using the first key information and the second key information, and data transmitted from the wireless terminal (700) through the authentication server (600) towards the intercom master device (500) is encrypted using the third key information and the fourth key information,
wherein, when it is detected that a person came to an entrance door (210), the entrance slave device (400) transmits a visiting notification to the intercom master device (500), and the intercom master device (500) starts a time tracking of the time that has elapsed after the visiting notification was received, and, when receiving the instruction to unlock the electronic lock (300), the tracked time is compared with an operation performance time that is prescribed in advance as a time length during which the electronic lock has to be unlocked with a remote operation from the wireless terminal (700), and the electronic lock (300) is caused to be unlocked in case the tracked time is shorter than the operation performance time.

## Patentansprüche

1. Sprechanlagensystem (100), umfassend ein elektronisches Schloss (300), ein Eingangs-Slave-Gerät (400), ein Sprechanlagen-Master-Gerät (500), das mit dem elektronischen Schloss (300) und dem Eingangs-Slave-Gerät (400) auf eine solche Weise verbunden ist, dass eine Kommunikation mit dem elektronischen Schloss (300) und dem Eingangs-Slave-Gerät (400) möglich ist, und einen Authentifizierungsserver (600), der sich mit dem Sprechanlagen-Master-Gerät (500) so verbindet, dass eine Kommunikation mit dem Sprechanlagen-Master-Gerät (500) möglich ist,
wobei der Authentifizierungsserver (600) konfiguriert ist, einen Austausch von zweiten Schlüsselinformationen mit dem Sprechanlagen-Master-Gerät (500) durchzuführen und einen ersten Verschlüsselungs-Kommunikationspfad zwischen dem Authentifizierungsserver (600) selbst und dem Sprechanlagen-Master-Gerät (500) aufzubauen,
wobei der Authentifizierungsserver (600) konfiguriert ist, einen Austausch von vierten Schlüsselinformationen mit einem drahtlosen Endgerät (700) durchzuführen, um einen zweiten Verschlüsselungs-Kommunikationspfad zwischen dem Authentifizierungsserver (600) selbst und dem drahtlosen Endgerät (700) aufzubauen, wobei das drahtlose Endgerät (700) konfiguriert ist, eine Kommunikation mit dem Sprechanlagen-Master-Gerät (500) über den Authentifizierungsserver (600) durchzuführen,
wobei das Sprechanlagen-Master-Gerät (500) konfiguriert ist, einen Austausch von ersten Schlüsselinformationen und dritten Schlüsselinformationen mit dem drahtlosen Endgerät (700) durchzuführen und einen dritten Verschlüsselungs-Kommunikationspfad zwischen dem Sprechanlagen-Master-Gerät (500) selbst und dem drahtlosen Endgerät (700) aufzubauen, und
**dadurch gekennzeichnet, dass** das Sprechanlagen-Master-Gerät (500) konfiguriert ist, eine Anweisung zum Entriegeln des elektronischen Schlosses (300) zu empfangen, die über den ersten Verschlüsselungs-Kommunikationspfad, den zweiten Verschlüsselungs-Kommunikationspfad und den dritten Verschlüsselungs-Kommunikationspfad vom drahtlosen Endgerät (700) übertragen wird, wobei ein Doppel-Verschlüsselungs-Kommunikationspfad zwischen dem Sprechanlagen-Master-Gerät (500) und dem Authentifizierungsserver (600) und zwischen dem Authentifizierungsserver (600) und dem drahtlosen Endgerät (700) aufgebaut wird, so dass Daten, die von dem Sprechanlagen-Master-Gerät (500) über den Authentifizierungsserver (600) zum drahtlosen Endgerät (700) übertragen werden, unter Verwendung der ersten Schlüsselinformation und der zweiten Schlüsselinformation verschlüsselt werden, und Daten, die vom drahtlosen Endgerät (700) über den Authentifizierungsserver (600) zum Sprechanlagen-Master-Gerät (500) übertragen werden, unter Verwendung der dritten Schlüsselinformation und der vierten Schlüsselinformation verschlüsselt werden,
wobei, wenn festgestellt wird, dass eine Person zu einer Eingangstür (210) gekommen ist, das Eingangs-Slave-Gerät (400) eine Besuchsmeldung an das Sprechanlagen-Master-Gerät (500) überträgt und das Sprechanlagen-Master-Gerät (500) eine Zeiterfassung der Zeit, die nach dem Empfang der Besuchsmeldung verstrichen ist, startet, und
wobei das Sprechanlagen-Master-Gerät (500) zu einem Zeitpunkt eines Empfangs der Anweisung zum Entriegeln des elektronischen Schlosses (300) die erfasste Zeit mit einer Betriebsausführungszeit vergleicht, die im Voraus als eine Zeitdauer vorgeschrieben ist, während der das elektronische Schloss mit einer Fernsteuerung von dem drahtlosen Endgerät (700) entriegelt werden muss, und bewirkt, dass das elektronische Schloss (300) entriegelt wird, falls die erfasste Zeit kürzer ist als die Betriebsausführungszeit.

2. System (100) nach Anspruch 1,
wobei während einer verschlüsselten Kommunikation das Sprechanlagen-Master-Gerät (500) das drahtlose Endgerät (700) registriert und den Austausch der Schlüsselinformationen zwischen dem Sprechanlagen-Master-Gerät (500) selbst und dem drahtlosen Endgerät (700) durchführt.

3. System (100) nach Anspruch 1,
wobei beim Empfang der Besuchsmeldung das Sprechanlagen-Master-Gerät (500) eine für das Endgerät bestimmte Besuchsmeldung an das drahtlose Endgerät (700) über den ersten Verschlüsselungs-Kommunikationspfad, den zweiten Verschlüsselungs-Kommunikationspfad und den dritten Verschlüsselungs-Kommunikationspfad überträgt.

4. System (100) nach Anspruch 3,
wobei beim Empfang der für das Endgerät bestimmten Besuchsmeldung das drahtlose Endgerät (700) Informationen ausgibt, die darauf hindeuten, dass die Person zur Eingangstür (210) gekommen ist.

5. System (100) nach einem der vorhergehenden Ansprüche,
wobei das Sprechanlagen-Master-Gerät (500) eine Betriebsverweigerungsmitteilung an das drahtlose Endgerät (700) überträgt, ohne zu bewirken, dass das elektronische Schloss (300) entriegelt wird, falls die erfasste Zeit länger als die Betriebsausführungszeit ist.

6. System (100) nach einem der vorhergehenden Ansprüche,
wobei das Sprechanlagen-Master-Gerät (500) in dem Fall, dass eine P2P-Startan-forderung, die eine Anforderung zum Starten der P2P-Kommunikation darstellt, von dem drahtlosen Endgerät (700) empfangen wird, die P2P-Kommunikation mit dem drahtlosen Endgerät (700) startet.

7. System (100) nach Anspruch 6,
wobei das Sprechanlagen-Master-Gerät (500) in dem Fall, dass eine Telefonkommunikations-Startanweisung von dem drahtlosen Endgerät (700) empfangen wird und die P2P-Kommunikation mit dem drahtlosen Endgerät (700) gestartet wird, eine Telefon-Gesprächsweiterleitung einschließlich der Übertragung von Audio- und Bilddaten zwischen der Eingangs-Slave-Vorrichtung (400) und dem drahtlosen Endgerät (700) startet.

8. Kommunikationsverfahren für ein Sprechanlagensystem (100), umfassend ein elektronisches Schloss (300), ein Eingangs-Slave-Gerät (400), ein Sprechanlagen-Master-Gerät (500), das mit dem elektronischen Schloss (300) und dem Eingangs-Slave-Gerät (400) so verbunden ist, dass eine Kommunikation mit dem elektronischen Schloss (300) und dem Eingangs-Slave-Gerät (400) möglich ist, und einen Authentifizierungsserver (600), der sich mit dem Sprechanlagen-Master-Gerät (500) so verbindet, dass eine Kommunikation mit dem Sprechanlagen-Master-Gerät (500) möglich ist,
wobei ein Austausch von zweiten Schlüsselinformationen durchgeführt wird und ein erster Verschlüsselungs-Kommunikationspfad zwischen dem Authentifizierungsserver (600) und Sprechanlagen-Master-Gerät (500) aufgebaut wird, ein Austausch von vierten Schlüsselinformationen durchgeführt wird und ein zweiter Verschlüsselungs-Kommunikationspfad zwischen dem Authentifizierungsserver (600) und einem drahtlosen Endgerät (700) aufgebaut wird, das eine Verbindung mit dem Authentifizierungsserver (600) so herstellt, dass eine Kommunikation mit dem Authentifizierungsserver (600) möglich ist, und das eine Kommunikation mit dem Sprechanlagen-Master-Gerät (500) über den Authentifizierungsserver (600) durchführt, und ein Austausch einer ersten Schlüsselinformation und einer dritten Schlüsselinformation durchgeführt wird und ein dritter Verschlüsselungs-Kommunikationspfad zwischen dem Sprechanlagen-Master-Gerät (500) und dem drahtlosen Endgerät (700) aufgebaut wird,
**dadurch gekennzeichnet, dass** das Sprechanlagen-Master-Gerät (500) eine Anweisung zum Entriegeln des elektronischen Schlosses (300) vom drahtlosen Endgerät (700) über den ersten Verschlüsselungs-Kommunikationspfad, den zweiten Verschlüsselungs-Kommunikationspfad und den dritten Verschlüsselungs-Kommunikationspfad empfängt, wobei ein Doppel-Verschlüsselungs-Kommunikationspfad zwischen dem Sprechanlagen-Master-Gerät (500) und dem Authentifizierungsserver (600) und zwischen dem Authentifizierungsserver (600) und dem drahtlosen Endgerät (700) aufgebaut wird, so dass Daten, die von dem Sprechanlagen-Master-Gerät (500) über den Authentifizierungsserver (600) zu dem drahtlosen Endgerät (700) übertragen werden, unter Verwendung der ersten Schlüsselinformation und der zweiten Schlüsselinformation verschlüsselt werden, und Daten, die von dem drahtlosen Endgerät (700) über den Authentifizierungsserver (600) zu dem Sprechanlagen-Master-Gerät (500) übertragen werden, unter Verwendung der dritten Schlüsselinformation und der vierten Schlüsselinformation verschlüsselt werden,
wobei, wenn festgestellt wird, dass eine Person an eine Eingangstür (210) gekommen ist, das Eingangs-Slave-Gerät (400) eine Besuchsmeldung an das Sprechanlagen-Master-Gerät (500) überträgt und das Sprechanlagen-Master-Gerät (500) eine Zeiterfassung der Zeit, die nach dem Empfang der Besuchsmeldung verstrichen ist, startet, und, wenn die Anweisung zum Entriegeln des elektronischen Schlosses (300) empfangen wird, die erfasste Zeit mit einer Betriebsausführungszeit vergleicht, die im Voraus als eine Zeitdauer vorgeschrieben ist, während der das elektronische Schloss mit einer Fernsteuerung von dem drahtlosen Endgerät (700) entriegelt werden muss, und das elektronische Schloss (300) entriegelt wird, wenn die erfasste Zeit kürzer ist als die Betriebsausführungszeit.

## Revendications

1. Système d'interphone (100) qui comprend une serrure électronique (300), un dispositif esclave d'entrée (400), un dispositif maître d'interphone (500), qui se connecte à la serrure électronique (300) et au dispositif esclave d'entrée (400) de telle sorte qu'une communication avec la serrure électronique (300) et le dispositif esclave d'entrée (400) est possible, et un serveur d'authentification (600) qui se connecte au dispositif maître d'interphone (500) de telle sorte qu'une communication avec le dispositif maître d'interphone (500) est possible,
dans lequel le serveur d'authentification (600) est configuré pour effectuer un échange de deuxièmes informations de clé avec le dispositif maître d'interphone (500) et pour établir un premier trajet de communication de chiffrement entre le serveur d'authentification (600) lui-même et le dispositif maître d'interphone (500),
dans lequel le serveur d'authentification (600) est configuré pour effectuer un échange de quatrièmes informations de clé avec un terminal sans fil (700) et pour établir un deuxième trajet de communication de chiffrement entre le serveur d'authentification (600) lui-même et le terminal sans fil (700), le terminal sans fil (700) étant configuré pour effectuer une communication avec le dispositif maître d'interphone (500) par l'intermédiaire du serveur d'authentification (600),
dans lequel le dispositif maître d'interphone (500) est configuré pour effectuer un échange de premières informations de clé et de troisièmes informations de clé avec le terminal sans fil (700) et pour établir un troisième trajet de communication de chiffrement entre le dispositif maître d'interphone (500) lui-même et le terminal sans fil (700) et
**caractérisé en ce que** le dispositif maître d'interphone (500) est configuré pour recevoir une instruction de déverrouillage de la serrure électronique (300), qui est transmise par l'intermédiaire du premier trajet de communication de chiffrement, du deuxième trajet de communication de chiffrement et du troisième trajet de communication de chiffrement, à partir du terminal sans fil (700), un double trajet de communication de chiffrement étant établi entre le dispositif maître d'interphone (500) et le serveur d'authentification (600) et entre le serveur d'authentification (600) et le terminal sans fil (700) de telle sorte que des données transmises à partir du dispositif maître d'interphone (500) par l'intermédiaire du serveur d'authentification (600) vers le terminal sans fil (700) sont chiffrées à l'aide des premières informations de clé et des deuxièmes informations de clé et des données transmises à partir du terminal sans fil (700) par l'intermédiaire du serveur d'authentification (600) vers le dispositif maître d'interphone (500) sont chiffrées à l'aide des troisièmes informations de clé et des quatrièmes informations de clé,
où, lorsqu'il est détecté qu'une personne est arrivée à une porte d'entrée (210), le dispositif esclave d'entrée (400) transmet une notification de visite au dispositif maître d'interphone (500) et le dispositif maître d'interphone (500) démarre un suivi temporel du temps qui s'est écoulé après la réception de la notification de visite et
où, au moment de la réception de l'instruction de déverrouillage de la serrure électronique (300), le dispositif maître d'interphone (500) compare le temps suivi à un temps de performance de fonctionnement qui est prescrit à l'avance en tant que durée pendant laquelle la serrure électronique doit être déverrouillée avec un fonctionnement à distance du terminal sans fil (700) et amène la serrure électronique (300) à être déverrouillée dans le cas où le temps suivi est plus court que le temps de performance de fonctionnement.

2. Système (100) selon la revendication 1,
dans lequel, pendant une communication de chiffrement, le dispositif maître d'interphone (500) enregistre le terminal sans fil (700) et effectue l'échange des informations de clé entre le dispositif maître d'interphone (500) lui-même et le terminal sans fil (700).

3. Système (100) selon la revendication 1,
dans lequel, lors de la réception de la notification de visite, le dispositif maître d'interphone (500) transmet une notification de visite à destination de terminal au terminal sans fil (700) par l'intermédiaire du premier trajet de communication de chiffrement, du deuxième trajet de communication de chiffrement et du troisième trajet de communication de chiffrement.

4. Système (100) selon la revendication 3,
dans lequel, lors de la réception de la notification de visite à destination de terminal, le terminal sans fil (700) délivre des informations indiquant que la personne est arrivée à la porte d'entrée (210).

5. Système (100) selon l'une quelconque des revendications précédentes,
dans lequel le dispositif maître d'interphone (500) transmet une notification de refus de fonctionnement au terminal sans fil (700) sans amener la serrure électronique (300) à être déverrouillée dans le cas où le temps suivi est plus long que le temps de performance de fonctionnement.

6. Système (100) selon l'une quelconque des revendications précédentes,
dans lequel le dispositif maître d'interphone (500), dans le cas où une requête de démarrage P2P qui fait une requête de démarrage de la communication P2P est reçue à partir du terminal sans fil (700), démarre la communication P2P avec le terminal sans fil (700).

7. Système (100) selon la revendication 6,
dans lequel le dispositif maître d'interphone (500), dans le cas où une instruction de démarrage de conversation téléphonique est reçue à partir du terminal sans fil (700) et où la communication P2P avec le terminal sans fil (700) est démarrée, démarre un relais de conversation téléphonique comprenant le transfert de données audio et de données d'image entre le dispositif esclave d'entrée (400) et le terminal sans fil (700).

8. Procédé de communication pour un système d'interphone (100) qui comprend une serrure électronique (300), un dispositif esclave d'entrée (400), un dispositif maître d'interphone (500), qui se connecte à la serrure électronique (300) et au dispositif esclave d'entrée (400) de telle sorte qu'une communication avec la serrure électronique (300) et le dispositif esclave d'entrée (400) est possible, et un serveur d'authentification (600) qui se connecte au dispositif maître d'interphone (500) de telle sorte qu'une communication avec le dispositif maître d'interphone (500) est possible, un échange de deuxièmes informations de clé étant effectué et un premier trajet de communication de chiffrement étant établi entre le serveur d'authentification (600) et le dispositif maître d'interphone (500), un échange de quatrièmes informations de clé étant effectué et un deuxième trajet de communication de chiffrement étant établi entre le serveur d'authentification (600) et un terminal sans fil (700) qui réalise une connexion au serveur d'authentification (600) de telle sorte qu'une communication avec le serveur d'authentification (600) est possible et qui effectue une communication avec le dispositif maître d'interphone (500) par l'intermédiaire du serveur d'authentification (600) et un échange des premières informations de clé et de troisièmes informations de clé étant effectué et un troisième trajet de communication de chiffrement étant établi entre le dispositif maître d'interphone (500) et le terminal sans fil (700),
**caractérisé en ce que** le dispositif maître d'interphone (500) reçoit une instruction de déverrouillage de la serrure électronique (300) à partir du terminal sans fil (700) par l'intermédiaire du premier trajet de communication de chiffrement, du deuxième trajet de communication de chiffrement et du troisième trajet de communication de chiffrement, un double trajet de communication de chiffrement étant établi entre le dispositif maître d'interphone (500) et le serveur d'authentification (600) et entre le serveur d'authentification (600) et le terminal sans fil (700) de telle sorte que des données transmises à partir du dispositif maître d'interphone (500) par l'intermédiaire du serveur d'authentification (600) vers le terminal sans fil (700) sont chiffrées à l'aide des premières informations de clé et des deuxièmes informations de clé et des données transmises à partir du terminal sans fil (700) par l'intermédiaire du serveur d'authentification (600) vers le dispositif maître d'interphone (500) sont chiffrées à l'aide des troisièmes informations de clé et des quatrièmes informations de clé,
où, lorsqu'il est détecté qu'une personne est arrivée à une porte d'entrée (210), le dispositif esclave d'entrée (400) transmet une notification de visite au dispositif maître d'interphone (500) et le dispositif maître d'interphone (500) démarre un suivi temporel du temps qui s'est écoulé après la réception de la notification de visite et, lors de la réception de l'instruction de déverrouillage de la serrure électronique (300), le temps suivi est comparé à un temps de performance de fonctionnement qui est prescrit à l'avance en tant que durée pendant laquelle la serrure électronique doit être déverrouillée avec un fonctionnement à distance du terminal sans fil (700) et la serrure électronique (300) est amenée à être déverrouillée dans le cas où le temps suivi est plus court que le temps de performance de fonctionnement.
